# EUROPEAN PATENT APPLICATION

(11) **EP 1 646 216 A1**
(43) Date of publication of application: **12.04.2006**
(21) Application number: 03816054.5
(22) Date of filing: 27.02.2003
(51) Int. Cl.: H04M 3/42, H04M 11/00

(54) **SPEECH COMMUNICATION SYSTEM, SERVER USED FOR THE SAME, AND RECEPTION RELAY DEVICE**

(71) Applicant: Kubo, Yukio, Osaka-shi, Osaka 551-0031 (JP)
(72) Inventor: KUBO, Yukio, Osaka-shi, Osaka 551-0031 (JP); MIKAMI, Kazuo, Kyoto-shi, Kyoto 601-8432 (JP)
(74) Representative: HOFFMANN EITLE
(86) International application number: PCT/JP2003/002200
(87) International publication number: WO 2004/077804

(57) **Abstract**

A server (1) includes a database (1c) for recording a member telephone number correlated with a dedicated telephone number set for each member and a caller telephone number detection device (1d) for detecting a telephone number of a user. The server (1) extracts a telephone number of a member by using the dedicated telephone number as a key and transmits it together with the telephone number of the user to a reception relay device (10) of a callback company (2) via the Internet (21), so that callback is performed to connect the line. Thus, it is possible to cope with an enquiry from a mobile telephone without charging the customer a communication fare, thereby suppressing the communication fare and protecting the customer personal information.

## Description

### Technical Field

The present invention relates to a communication system, or a server and the like that is used in such a system.

### Background Art

For companies that provide home shopping such as catalogue shopping, TV shopping, and online shopping utilizing the Internet, or various services including reservation of airline tickets, reserved seats, hotels and various kinds of applications, it is desirable in terms of customer acquisition and promotion of order entry that customers can freely make orders, reservations, and inquiries.

While online shopping utilizing the Internet has acquired a widespread use in recent years, customers can have concern about merchandise when they are about buy them and often want to confirm whether the company have inventory, delivery time, how and how much they should pay, because they cannot actually see articles or inquire of a salesclerk details about the articles.

Many of such company accept such inquiries from customers by way of E-mail. However, correspondence by E-mail is less than satisfactory when the customer needs an immediate reply, has difficulty in correctly writing their question, has many different questions, or even does not utilize a personal computer.

In that respect, telephone can allow customers to talk to the company and immediately make orders or ask about merchandise by just making a telephone call. As well, the company may hear the customer's requests and recommend an item suitable for the customer to encourage the customer to buy it.

In most cases, however, it is the customers that make a phone call and thus pay for the call. Particularly in the case of home shopping, the location of the customer is likely far from that of the company and thus the cost for a telephone call will be also high. Customers could hesitate to inquire about merchandise at the cost of communication fare although they are interested to do so, or could not make a call being concerned about an expensive communication fare for a possible long talk on the phone.

For such reasons, company often utilize telephone services called reverse-charge such as toll-free (registered trademark) services where a company receiving calls pay the communication fare and customers can make a call at no cost so that customers can freely call the company.

Similarly, reverse-charge telephone services are often utilized as a part of customer services such as after-the-sale services of some manufacturers for accepting repair requests or inquiries.

With such reverse-charge telephone services, the customers can call the company without having to worry about telephone fee, while the company can make new sales or continuously maintain a good relationship with customers with higher satisfaction of the customers even at the cost of communication fare for communicating with the customers.

In recent years, mobile phones (including PHS, which applies to the following) have gained a widespread use and many of a younger generation utilize only a mobile phone without having a fixed-line phone installed. Although the communication fare for mobile phones are significantly higher than regular fixed-line phones, mobile phones will be still more widely used as essential tools for modern life since they have such advantages as portability and the ability to make a call from anywhere, the ability to send/receive e-mails, accessibility to the Internet and the like for information gathering.

Until several years ago, toll-free services were only available for fixed-line phones, which are locatable, however, toll-free services available for mobile phones have been also implemented along with the proliferation of mobile phones.

However, communication fare for toll-free services available for mobile phones is significantly higher than those for fixed-line phones. Accordingly, if a company pays the communication fare for an expensive toll-free service for mobile phones, the cost will be so high that it does not pay. For that reason, a current situation is that use of toll-free services is limited to calls from fixed-line phones and customers have to pay for toll-free calls from their mobile phones.

However, the customers may be reluctant to make inquires to the company even at the cost of expensive communication fare and give up to make inquires or an order. In consideration of rapid proliferation of mobile phones as mentioned above and the likelihood that they will acquire still more users, current services that do not provide convenience for customers using mobile phones could lead to loss of many potential customers and important business opportunities.

Some company adopt such a system that they ask a customer's telephone number when the customer calls the company and call the customer back so as to reduce the communication fare that the customer should pay. However, communication fare for calling a mobile phone will be higher than that for a fixed-line phone if the customer uses a mobile phone, and another issue is that the customer has to give their phone number to the company.

In the present information society, customers are often sensitive about their personal information and may be reluctant to give their phone number to the company. In these years particularly, it is generally known that some commercially-available software enable acquisition of personal information such as personal address and name through reverse resolution from a telephone number and such information is used for sales promotion such as telephone solicitation and direct mails. Thus, customers are uncomfortable letting the company get even their phone numbers only, and, due to such situation, the system is not widely adopted that the customers give their phone number and the company calls the customers back.

Meanwhile, one of ways for avoiding expensive phone line charges is known as "callback". The callback was originally used mainly for overseas call when one makes a telephone call from a country where communication fare is high to a country where communication fare is low. A general procedure of utilizing such callback is as follows.

First, one (a user) that wants to utilize callback in advance registers with a callback company his/her name, a payment method (e.g., credit card number), and his telephone number to become a member.

Once the user becomes a member, a telephone number dedicated for individual member for requesting callback is given to the user by the callback company. This telephone number is a telephone number for a country which the callback company utilizes and each member is assigned a different number.

When making a telephone call, the member (user) once calls the phone number for requesting callback (herein, to make a telephone call is referred to as "to call"), and, upon hearing ring tone, hangs up the phone (i.e., stops calling). During this, no communication fare will be charged because connection is not established during this process. Although callback companies are typically ones in countries where communication fare is low, they are sometimes domestic company that has a tie-up with company of a country of lower communication fare.

The callback company identifies the member from the telephone number for callback request. And some time after the call from the member, the callback company calls the member that utilizes that telephone number. Because the callback company calls the user, a lower communication fare for the country that the callback company utilizes will be applied during this process.

When receiving the call from the callback company, the user will hear an audio message. The member enters a password that he/she registered and a telephone number of the party he/she wants to call in accordance with the audio message. Because callback is an international call from overseas, the member need to dial a number for an international telephone company and a country code as well.

After confirming the password, the callback company then calls the other party's telephone number and connect a line between the user and the other party so as to allow them to talk to each other on the phone.

In recent years, in addition to oversea calls, callback is increasingly utilized for making domestic calls at a fee structure for a country where communication fare is low. The fee saving by callback is especially effective for mobile phones (herein including PHS and the like, which applies to the following) that involve significantly higher communication fare than fixed-line phones.

However, users have to go through a burdensome task of entering many numbers and symbols when sequentially entering their password, a phone number of an international telephone company, country code, and the other party's phone number.

In addition, the user must clear the process once and enter the numbers from the beginning if he/she makes a single mistake when entering the numbers. Especially with a mobile phone having small buttons, one can often push a neighboring button by accident and become frustrated by entering incorrectly when they are on the street and have difficulty in concentrating his attention to entering. There is another problem that connection could be established with an incorrect party if the user does not notice the mistake in typing.

### Disclosure of Invention

The invention has been made in view of the drawbacks outlined above, and its first object is to provide a speech communication system that allows a company to respond to inquiries from mobile phones with no communication fare charged to the customers, thereby suppressing a telephone fee while protecting the customers' personal information.

Its second object is to provide a callback system that allows a user to easily and correctly make a phone call to a desired party the user wants when calling from a mobile phone using callback.

The speech communication system of the invention includes a server (1) that is connected to a telephone line (20) and the Internet (21), and a reception relay device (10) that is connected to the Internet (21) and a telephone exchange (11), characterized in that the server (1) has a database (1c) that stores a member's telephone number associated with a dedicated telephone number assigned to the member; and a caller telephone number detection device (1d) that determines the telephone number of a user's telephone (3) without answering the phone when a call is made from the user's telephone (3) the dedicated telephone number; the server (1) retrieves the member's telephone number by searching the database (1c) with a dedicated telephone number that was called as a key, sends information including at least the member's telephone number and the telephone number of the user's telephone (3) to the reception relay device (10) via the Internet (21) after the call from the user's telephone (3) is hung up, the reception relay device (10), after receiving the member and user's telephone numbers sent from the server (1), calls the member's telephone number and the telephone number of the user's telephone (3) using the telephone exchange (11), and, when both the member and the user answer the phone, connects a telephone line between them to allow the parties to talk on the phone.

This allows the server (1) to obtain the telephone number of the member company corresponding to a dedicated telephone number using the database (1c) when the dedicated telephone number is called by the user (customer)'s telephone (3). The server (1) can also obtain the telephone number of the user (customer)'s telephone (3) by the caller telephone number detection device (1d). The server (1) can then send the user and the member company's telephone number to the reception relay device (10) over the Internet (21). Upon receiving the telephone numbers, the reception relay device (10) can call back those telephone numbers using the telephone exchange (11) to allow a telephone conversation between the parties.

Also, the speech communication system of the invention has a server (1) that is connected to a telephone line (20) and the Internet (21), and a reception relay device (10) that is connected to the Internet (21) and a telephone exchange (11), characterized in that the server (1) has a database (1c) that stores a dedicated telephone number individually assigned to each member associated with a plurality of contact telephone numbers used by the member to respond to telephone inquiries and with a contact ID; and a caller telephone number detection device (1d) that determines the telephone number of a user's telephone (3) when a dedicated telephone number is called by the user's telephone (3), the server (1) searches the database (1c) with a dedicated telephone number that was called and a contact ID that is sent from the user's telephone (3) through the telephone line (20) as keys so that it retrieves a contact telephone number for which the ID of the member assigned with the dedicated telephone number is set, sends information including at least the contact telephone number of the member and the telephone number of the user's telephone (3) to the reception relay device (10) via the Internet (21) after the telephone line with the user's telephone (3) is disconnected, and the reception relay device (10), after receiving the contact telephone number and the telephone number of the user's telephone (3) sent from the server (1), uses the telephone exchange (11) to call the contact telephone number and the telephone number of the user's telephone (3), and when both the telephone using the contact telephone number and the user's telephone (3) answer the phone, connects a telephone line between them to allow the parties talk to on the phone.

This also enables a telephone call between a user and a member company by way of callback. And, when a member company has a plurality of contact telephones, a telephone number for a more appropriate department can be determined for a contact ID without having to assign a plurality of dedicated telephone numbers to a single member company. The selection of a contact ID can be made from a user's telephone.

The server of the invention is a server used for the speech communication system above.

The speech communication system of the invention has a server that is connected to a telephone line (20) and the Internet (21) and a reception relay device (10) that is connected to the Internet (21) and a telephone exchange (10), characterized in that the server (1) has a database (1c) that stores a dedicated telephone number individually assigned to each member associated with a plurality of contact telephone numbers that are used by the member for responding to telephone inquiries and with a contact ID; caller telephone number detection device (1d) that determines the telephone number of the user's telephone when the dedicated telephone number is called by the user's telephone (3); a voice message recording device (1e) that records a voice message about a contact ID as associated with a dedicated telephone number; and a voice message play device (1f) that can play the voice message to convey it as audio to a called party, the server (1) can convey a voice message that is associated with a dedicated number to a user's telephone (3) through a telephone line when a call to the dedicated telephone number is answered; the server (1) searches the database (1c) with the called dedicated telephone number and a contact ID that is sent from the user's telephone (3) through the telephone line (20) as keys to retrieve a contact telephone number for which the contact ID of the member assigned with the dedicated telephone number is set; the server (1) sends information including at least the contact telephone number and the telephone number of the user's telephone (3) to the reception relay device (10) over the Internet (21) after the telephone line with the user's telephone (3) is disconnected; the reception relay device (10), after receiving the contact telephone number and the telephone number of the user's telephone (3) sent from the server (1), calls the contact telephone number and the telephone number of the user's telephone (3) using the telephone exchange (11), and when both the telephone (4a) for the contact using the contact telephone number and the user's telephone answer the call, connects a telephone line between them to allow the both parties to talk on the phone.

According to this, a contact ID can be used to enable a telephone call between a user and a member company via callback. The contact ID can be informed to the user by the voice message prepared for each member company.

The reception relay device (10) and the telephone exchange (11) according to the speech communication system of the invention may be managed by the callback company (2).

Since the server (1) and the reception relay device (10) can communicate information with one another over the Internet, they may be geographically apart from each other. By utilizing a callback company that has the telephone exchange (11) installed in a country or region where communication fares are low or a domestic callback company that has a tie-up with such a callback company, a lower communication fare is applied and one can make a telephone call at a low cost.

The speech communication system server (1) of the invention is connected to a telephone line (20) and the Internet (21), having a database (1c) that stores a member's telephone number associated with a dedicated telephone number individually assigned to the member and a caller telephone number detection device (1d) that determines the telephone number of a user's telephone (3) without answering the phone when a call is made from the user's telephone (3) to the dedicated telephone number, characterized in that the server (1) can retrieve the member's telephone number by searching the database with the dedicated telephone number as a key when the dedicated telephone number is called; after the call from the user's telephone (3) is hung up, send information including at least the member's telephone number and the telephone number of the user's telephone (3) to the reception relay device (10) of the callback company (2) via the Internet so that it prompts the reception relay device (10) to call both the member's telephone number and the telephone number of the user's telephone to connect a telephone line between them.

The server of the invention is a server that is used for the speech communication system described above.

The speech communication system server of the invention is connected to a telephone line (20) and the Internet(21), having a database (1c) that stores a dedicated telephone number individually assigned to each member as associated with a plurality of contact telephone numbers used by the member for responding to telephone inquiries and with a contact ID; and a caller telephone number detection device (1d) that determines the telephone number of the user's telephone (3) when a call is made from the user's telephone (3) to the dedicated telephone number, characterized in that the server, when a contact ID is sent from the user's telephone (3) to the dedicated telephone number through the telephone line (20), can search the database (1c) with the dedicated telephone number and the contact ID as keys to retrieve a contact telephone number for which the contact ID for the member assigned with the dedicated telephone number is set, and after the telephone line with the user's telephone (3) is disconnected, send information including the contact telephone number and the telephone number of the user's telephone (3) to the reception relay device (10) of the callback company (2) via the Internet (21) so as to prompt the reception relay device (10) to call both the contact telephone number and the telephone number of the user's telephone (3) to connect a telephone line between the both parties.

The speech communication system server of the invention is connected to the telephone line (20) and the Internet (21), having database (1c) that stores a dedicated telephone number individually assigned to each member as associated with a plurality of contact telephone numbers used by the member for responding to telephone inquiries and with a contact ID; a caller telephone number detection device (1d) that determines the telephone number of a user's telephone (3) when a call is made from the user's telephone (3) to a dedicated telephone number; a voice message recording device (1e) that records a voice message including information on a contact ID as associated with a dedicated telephone number; and a voice message play device (1f) that can play the voice message and convey it as audio to a called party, characterized in that the server can play a voice message associated with a dedicated telephone number and send it to a user's telephone through a telephone line when a call is made from the user's telephone (3) to the dedicated telephone number, search the database (1c) with the dedicated telephone number and the contact ID as keys when the contact ID is sent from the user's telephone (3) through the telephone line (20) so as to retrieve a contact telephone number for which the contact ID of the member assigned the dedicated telephone number is set, send information including at least the contact telephone number and the telephone number of the user's telephone (3) to the reception relay device (10) of the callback company (2) via the Internet (21) after the telephone line with the user's telephone (3) is disconnected so as to prompt the reception relay device (10) to call both the contact telephone number and the telephone number of the user's telephone(3) to connect a telephone line between the both parties.

The server according to the invention is a server used for the speech communication system above.

The reception relay device (10) for the speech communication system of the invention is connected to the Internet (21) and the telephone exchange (11), characterized in that, when it receives information including two telephone numbers sent from the predetermined server (1) via the Internet (21), it can cause the telephone exchange (11) to call both the received telephone numbers, and when both the parties answer the phone, to connect a telephone line between them to allow the parties to talk on the phone.

The reception relay device (10) of the invention is a reception relay device used for the above-described speech communication system.

The server (1) according to the inventive speech communication system has a phone call status determination unit (1g), wherein the phone call status determination unit (1g) can record the number of telephone lines that each member can handle at a time as "possible concurrent calls" and the number of currently busy telephone lines for each member as "the number of current calls", it can compare the "possible concurrent calls" with "the number of current calls", and, when a user makes a call to the member's dedicated telephone number, it preferably sends ring tone or a voice message to the user's telephone (3) indicating that the phone lines of the member are busy without sending information on telephone numbers to the reception relay device if "the member's possible concurrent calls" is equal to "the number of current calls".

According to this, the server can determine the number of telephone lines that a member can handle simultaneously by recording the possible concurrent calls in the phone call status determination unit (1g). Also, since the server can recognize the number of telephone lines that are now busy as "the number of current calls" for each member, it can determine if a member can respond to telephone inquiries by comparing "the possible concurrent calls" with "the number of current calls". If "the number of current calls" is less than "the possible concurrent calls", the server (1) causes the callback company (2) to make a callback to connect a line between the user and the member as in the normal routine.

On the other hand, when "the possible concurrent calls" is equal to "the number of current calls", the server (1) can determine that all the telephone lines that the member can handle are busy and thus inform a user who calls the member's dedicated telephone number that the phone lines of the member are busy, without having the callback company (2) to make a callback.

"The number of current calls" according to the inventive speech communication system is controlled to be always equal to the number of telephone calls currently accepted by each member based on information on call status sent from the reception relay device over the Internet.

"The number of current calls" varies depending on information about telephone call status sent from the callback company (2) over the Internet. That is, information regarding connection and disconnection of members' telephone lines is sent from the callback company (2) to the server (1), and the server (1) updates the number of current calls recorded in the phone call status determination unit (1g) based on the information. Thus, the server (1) can determine how many telephone lines are currently busy for each member by the number of current calls.

The speech communication system server of the invention has a phone call status determination unit (1g) that can record the number of telephone lines that each member can handle at a time as "possible concurrent calls" and the number of currently busy telephone lines for each member as "the number of current calls" and compare "the possible concurrent calls" with "the number of current calls", "the number of current calls" recorded in the phone call status determination unit (1g) is controlled to be always equal to the number of current calls for each member based on information on call status sent from the reception relay device via the Internet, and, when a user makes a call to the member's dedicated telephone number, it preferably sends ring tone or a voice message to the user's telephone (3) indicating that the phone lines of the member are busy without sending information on telephone numbers to the reception relay device if the member's "possible concurrent calls" is equal to "the number of current calls".

With the speech communication system of the invention, when the telephone exchange cannot connect a telephone line after calling the member's telephone number and the telephone number of the user's telephone (3), the telephone exchange calls both the telephone numbers again after a predetermined time period.

At the time of callback from the callback company (2) to the member and the user, the callback might not be received such as when either party's line is busy or either party is away from the telephone. In those cases, a line cannot be connected between the parties. The callback company then calls them again to attempt line connection in such situations.

The speech communication system of the invention has a server (1) that is connected to a telephone line (20) and the Internet (21) and a reception relay device (10) that is connected to the Internet (21) and a telephone exchange (11), characterized in that the server (1) has a caller telephone number detection device (1d) that determines the telephone number of a user's telephone (3) without answering the phone when a call is made from the user's telephone (3) to the dedicated telephone number, the server (1) can send information including at least the dedicated telephone number and the telephone number of the user's telephone (3) to the reception relay device (10) via the Internet (21) after the call from the user's telephone (3) is hung up, the reception relay device (10) has a database (10a) that stores a member's telephone number associated with a dedicated telephone number assigned to the member, after receiving the information including the dedicated telephone number and the telephone number of the user's telephone (3) sent from the server (1), the reception relay device (10) searches the database (10a) with the dedicated telephone number as a key to retrieve the member's telephone number, calls the member's telephone number and the telephone number of the user's telephone (3) using the telephone exchange (11), and when both the parties answer the phone, it connect a telephone line between them to allow the parties to talk on the phone.

As the callback company is provided with the database (10a) for member telephone numbers, matching of dedicated telephone numbers with member telephone numbers can be made at the callback company. Accordingly, the server (1) of the intermediary need not necessarily include a database for member telephone numbers.

The speech communication system server of the invention is connected to a telephone line (20) and the Internet (21), having a caller telephone number detection device (1d) that determines the telephone number of a user's telephone (3) without answering the phone when a call is made from the user's telephone (3) to the dedicated telephone number, characterized in that the server (1) can send information including at least the dedicated telephone number and the telephone number of the user's telephone (3) to the reception relay device (10) of the callback company (2) via the Internet (21) after the call from the user's telephone (3) is hung up.

The speech communication system server of the invention is a server used for the above-described speech communication system, and does not necessarily need the database (1c) for member telephone numbers.

The speech communication system of the invention has a server (1) that is connected to the Internet (21) and a reception relay device (10) that is connected to the Internet (21) and the telephone exchange (11), characterized in that the server (1) has functionality as an Internet server and includes a webpage recording unit (1b) for recording dedicated webpages for individual members and a database (1c) that stores member telephone numbers associated with the URLs of the members' dedicated webpages, a dedicated webpage displays a list of called parties with their telephone numbers registered by a member beforehand and allows a user to select a desired called party from the list, the server (1) searches the database (1c) with the URL of a dedicated webpage that has been accessed as a key to retrieve the telephone number of the member that uses the dedicated webpage, the server, after the member's access to the dedicated webpage is complete, sends at least the member's telephone number and information on the telephone number of the called party that was selected by the member on the dedicated webpage to the reception relay device (10) via the Internet, the reception relay device, after receiving the information on the member and the called party's telephone numbers sent form the server, calls the member and the called party's telephone numbers using the telephone exchange (11), and when both the member and the called party answer the phone, it connects a telephone line between them to allow the parties to talk on the phone.

According to this, a member who made registration in advance accesses his dedicated webpage to select a called party. The server (1) can identify the member from the dedicated webpage that was accessed and determines the member's telephone number. And it can retrieve the telephone number of the called party from the selection made on the dedicated webpage.

Information regarding the member and the called party's telephone numbers thus obtained is sent to the reception relay device (10) of the callback company (2) over the Internet (21). Upon receiving the information on the telephone numbers, the reception relay device (10) directs the telephone exchange (11) to call the member and the called party and connect a line between them. Accordingly, the member need not enter telephone numbers of his own and the called party when making a phone call via callback, which can avoid inputting errors. Thus, one can utilize a phone call via callback without being frustrated.

In the speech communication system of the invention, it is also preferable that the server (1) stores each member's password and sends information on a member's password when sending information on the telephone number of the member who accessed the dedicated webpage and that of the caller party to the reception relay device (10).

According to this, a password stored in the server (1) is automatically sent with information on the called party's telephone number even in a case where the callback company requires the member's password at the time of callback, so that the member need not enter his password one character by one.

In the speech communication system described above, when the telephone exchange (11) fails to connect a telephone line between the member and the called party after calling their telephones, the telephone exchange (11) calls those telephone numbers again after a predetermined time period.

At the time of callback to the member and the called party from the callback company (2), the callback might not be received such as when the phone of either of the parties is busy or is in out of a coverage area, or they are away from the phone. In such situations, a line cannot be connected between the parties. Thus, the callback company (2) calls the parties again to attempt to connect a line in such cases.

The speech communication system server (1) of the invention is connected to the Internet and has functionality as an Internet server, having a webpage recording unit (1b) that stores dedicated webpages for each member and a database that stores a member's telephone number associated with the URL of the dedicated webpage for the member, characterized in that a dedicated webpage displays a list of called parties with their telephone numbers registered by a member beforehand and allows a user to select a desired called party from the list, the server (1) searches the database with the URL of a dedicated webpage that is accessed as a key to retrieve the telephone number of the member that uses the dedicated webpage, the server, after the member's access to the dedicated webpage is complete, sends at least the member's telephone number and information on the telephone number of the called party selected by the member on the dedicated webpage to the reception relay device (10) of the callback company (2) via the Internet so as to prompt the reception relay device (10) to call both the member and the called party's telephone numbers to connect a telephone line between them.

The server of the invention is the server (1) used for the above-described speech communication system.

### Brief Description of Drawings

The features and advantages of the invention may be more fully understood upon reading the following detailed description in conjunction with the accompanying drawings in which:
Figure 1 shows an overview of the configuration of the first embodiment;
Figure 2 illustrates flow of the first embodiment;
Figure 3 shows an exemplary website screen used in the first embodiment;
Figures 4A and 4B illustrate a flow of the second embodiment;
Figure 5 shows an exemplary website screen used in the second embodiment;
Figure 6 shows an overview of the configuration of the second embodiment;
Figure 7 illustrates a flow of the third embodiment;
Figure 8 shows an exemplary website screen used in the third embodiment;
Figure 9 shows an overview of the configuration of the fifth embodiment ;
Figure 10 shows an overview of the configuration of the sixth embodiment;
Figure 11 illustrates a flow of the sixth embodiment;
Figure 12 illustrates an overview of the configuration of the seventh embodiment;
Figure 13 shows an exemplary screen of a dedicated webpage according to the seventh embodiment;

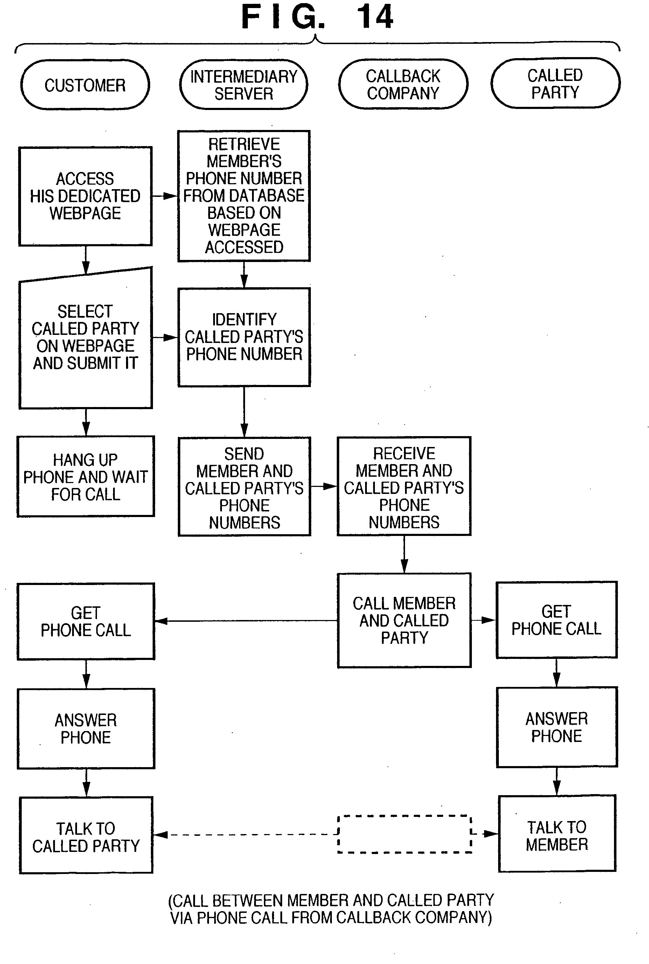

Figure 14 illustrates a flow up to a phone call according to the seventh embodiment; and
Figure 15 shows a communication system to which a server according to the eighth embodiment can be applied.

### Best Mode for Carrying Out the Invention

The invention will be described with its preferred embodiments.

### [First Embodiment]

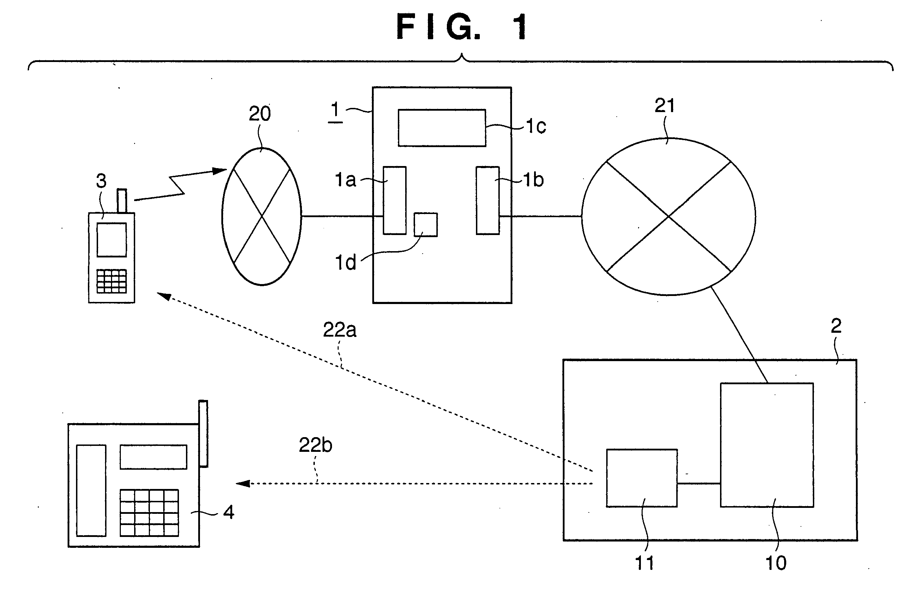

Figure 1 shows an overview of the configuration of the first embodiment of the invention. Reference number (1) represents a server of an intermediary company, which is connected to a public telephone line (20) via a telephone line interface (1a) and also connected to the Internet (21) via a communication interface (1b).

The server (1) also includes a database (1c) in which telephone numbers are stored. The telephone numbers stored in the database (1c) will be described later.

The server (1) further includes a caller telephone number detection device (1d) that can capture as a piece of information the telephone number of a caller's telephone that is sent by way of number display service.

The intermediary company's server may be a server that is owned, installed, and managed by the intermediary company or may be a rent-a-server that the company subscribes for. Also, the server (1) may be physically a single computer or may consist of multiple computers among which roles are distributed.

Although for clarity Figure 1 shows the telephone line interface (1a), communication interface (1b), database (1c) and caller telephone number detection device (1d) within the server (1), they need not be included in the computer that serves as the server (1). Rather, it is sufficient that they collectively serve as a portion of the server of the embodiment by being connected to the computer even though they are physically separate from the computer. This also applies to other embodiments of the invention.

In addition, although Figure 1 shows no processing unit in the server (1), the server (1) has of course a processing unit that performs various kinds of processing such as database search and transmission/reception of information. This applies to other embodiments as well.

A callback company (2), connected to the Internet, is typically an oversea company of a country where communication fare is low, e.g., the United States, but it may be a domestic callback company that has a tie-up with an oversea callback company.

A reception relay device (10) of the callback company (2) can communicate information with the server (1) of the intermediary company via the Internet (21). The reception relay device (10) is connected to a telephone exchange system (11).

The telephone exchange system (11) can make a call to a plurality of specified telephone numbers and connect a line in accordance with directions from the reception relay device (10).

In general, while the expression "to make a telephone call" may mean "to dial the other party's phone number" as well as "to become connected to the other party," when the discussion requires distinction, "to dial the other party's phone number to make the other party being called" will be expressed as "to call". Also, the expression "phone is answered" means not only to call the other party but also means that "a line is connected" by the other party becoming connected, i.e., a status in which a communication fare is charged.

Reference number (3) represents a telephone of a customer who makes inquiries or an order to the member company, whether a mobile phone (inclusive of PHS, which applies to the following) or a fixed-line telephone.

Reference number (4) represents a telephone of a member company (including personal businesses such as firms and public entities as well as large and small-to-medium companies, which applies to the following) that may respond to customers' inquiries by utilizing the present system.

Any company that wants to utilize this system should make membership registration with an intermediary company in advance to become a member company. Upon membership registration, the intermediary company assigns a dedicated telephone number to the member company.

The database (1c) of the server (1) stores a telephone number at which the member company actually communicate with the customer that are correlated with the dedicated telephone number that is set for the member company, and can retrieve the telephone number of the corresponding member company by performing a search with the dedicated telephone number as a key.

The member company may pay the usage fee to the intermediary company a fixed amount for a certain term, an amount varying depending on the number and duration of calls, or some combination of the both. In this embodiment, the member company is charged fees for the initial membership registration, a basic monthly charge, a communication fare for actually utilized calls, and a usage fee that depends on the communication fare. The communication fare is charged to the intermediary company by the callback company (2).

At that time, the intermediary company is informed of the phone number of the member company that made telephone calls together with the communication fare or duration of the calls, and thus can determine the communication fare for utilization by each of the member company. This billing of communication fare by the callback company may be made at a predetermined interval or for each telephone call. In any case, the way of setting and calculating of these fares is a matter that should be determined as appropriate, and the invention is not limited by the way of setting or calculating fares.

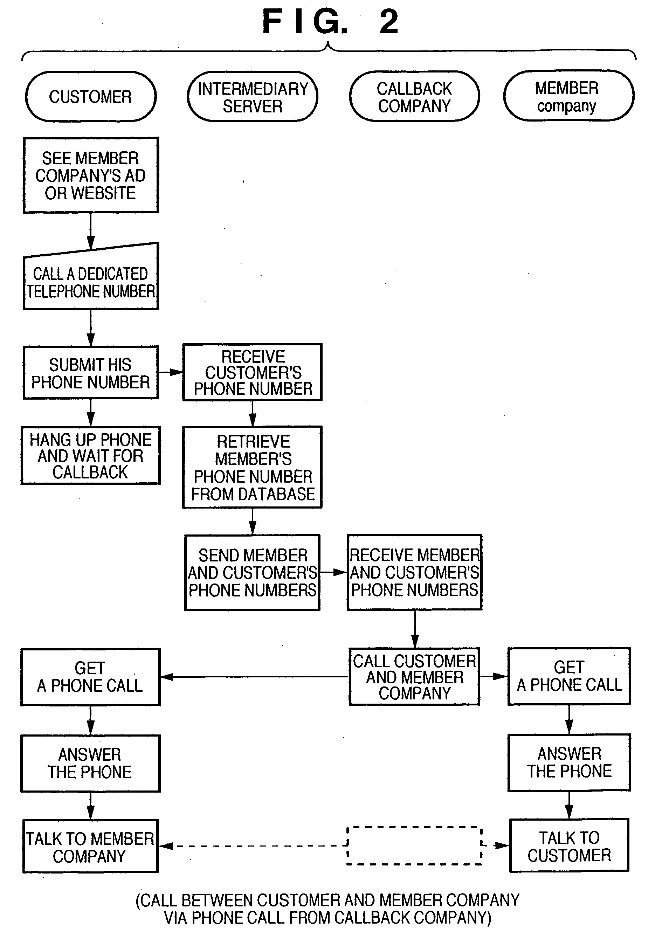

The utilization of the speech communication system of the embodiment will be now described. Figure 2 shows a procedure that enable a customer (user) and the company to talk to each other on the phone in the embodiment. As used herein, the term "customer" does not refer only to those who purchase merchandise and services but generally those who want to talk with a company by telephone utilizing this system (which applies to the following).

The member company posts telephone numbers for making inquiries or an order on its website, advertisement, brochure, or handbill. And, along with the numbers, it provides customers with instructions of how to utilize the speech communication system.

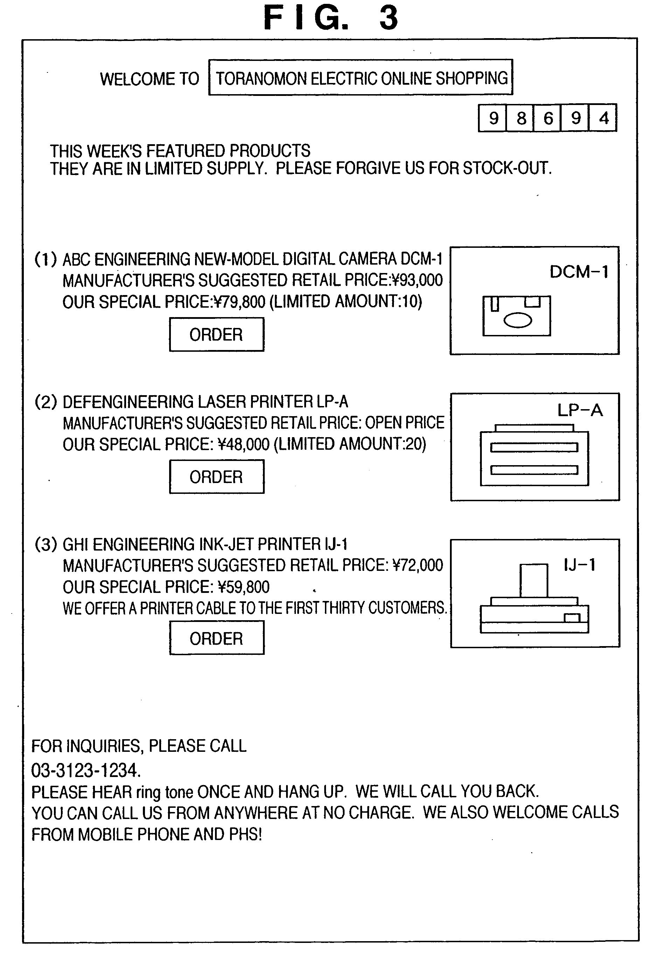

Figure 3 shows an example of a website screen for online shopping that is used in the embodiment. It shows the description and pictures of items, order buttons, as well as a telephone number for inquiry and a guide of utilization of the speech communication system. The telephone number for inquiry is a dedicated telephone number assigned to the member company.

The utilization guide should inform users at least:
(A) A user should call the specified number and hang up after hearing at least one ring tone.
(B) The user will be called back.
(C) The user will be charged no fee.
(D) The service is also available for a mobile phone and PHS.
However, the guide might be omitted if this communication system is so widely accepted that such guide is not required.

When the customer wants to make inquiries or an order upon viewing the advertisement or website, the customer uses the telephone (3) to call the specified phone number, i.e., the dedicated number of the member company. The customer then should hear ring tone "tururu" at least once. Since a line is not connected and thus the phone call is not answered at this point, none of the customer, the intermediary company, and the member company will be charged a communication fare.

Upon the telephone call, the server (1) can identify the dedicated telephone number that is being called and search the database (1c) with the dedicated telephone number as a key to retrieve the phone number of the telephone (4) of the member company that utilizes the dedicated telephone number.

In addition, with information on the telephone number of the calling customer's telephone (3) that is sent through a caller's telephone number display (number display) service, the caller telephone number detection device (1d) is used to retrieve the customer's telephone number.

The reason why the customer should hang up after hearing ring tone at least once is that the server (1) can have enough time required to identify the customer's phone number, however, in practice, a little shorter time will be enough.

Then, information including the telephone number of the member company's telephone (4) and that of the calling customer's telephone (3) thus obtained is sent to the callback company (2) via the Internet (21) by the communication interface (1b).

The reception relay device (10) of the callback company (2) receives the information on the telephone numbers of the member company and the customer that is sent from the server (1) via the Internet (21). It then sends a direction to the telephone exchange system (11) to call the telephone numbers of the member company and the customer. That is, the callback company (2) calls them back.

The telephone exchange system (11) calls the telephone (3) and (4) of the customer and the member company, respectively, and, at the point both the parties, i.e., the member company and the customer, answer the phone (become connected), a line is first connected between them and the customer and the member company can talk to each other on the phone.

The customer is aware of neither the intermediary company nor the callback company (2) and it appears as if the customer receives the callback from the member company. The reference numbers (22a) and (22b) in Figure 1 represent a call from the callback company (2) to the customer's telephone (3) and a call from the callback company (2) to the member company, respectively.

After the telephone line is connected, a communication fare of the country via which callback is made will be applied. In other words, no communication fare will be charged until both the parties answer the phone. Although telephone lines are of course employed when information on telephone numbers is sent from the server (1) to the callback company (2) via the Internet (21), no additional communication fare is charged because connection to the Internet is always-on connection on a flat-fee basis.

As communication fare for calling from overseas, even to a mobile phone, is quite lower than domestic communication fare for calls to mobile phones, member company can respond to inquiries from mobile phones at a low cost. This allows customers to freely make a call for inquiries without financial burden from a mobile phone as well as a fixed-line phone.

A callback system conventionally known is as follows: one who wants to make a phone call becomes a member of a callback company and registers with it his/her telephone number, bank account for fee payment and the like. And upon utilization, the member calls the callback company and hears ring tone and hangs up, and when the callback company calls back the customer, the customer enters the other party's telephone number and his/her membership password. And when the called party answers the phone, a line is connected between them. And the communication fare is charged to the caller.

On the other hand, customers need not become a member of the callback company nor pay communication fare in this embodiment. In short, the speech communication system of the invention is quite different from conventional callback systems in that any one can utilize this system.

What is more notable about the invention is that both the parties can make a phone call even if they do not know the telephone number of the other party's telephones (3) and (4). Although the telephone number of the customer's telephone (3) is determined by the caller telephone number detection device (1d) for the server (1) and sent to the callback company (2), the member company merely receives a call from the callback company (2) and is not informed of the customer's telephone number. Thus, unless the intermediary company informs the member company of the customer's phone number, the customer will never let the member company know his phone number. Indication of such confidentiality on the member company's website or advertisement along with a dedicated telephone number can give a good impression to customers.

In addition to not having to pay a fee, a customer can conceal his/her telephone number when calling a member company, so that the customer can freely make inquiries. The company thus allows their customers to freely make inquiries and gets more opportunities to appeal to their customers, leading to increased sales and enhanced customer services.

### [Second Embodiment]

In the first embodiment, each member company is assigned a dedicated telephone number. When a member company is a firm or a small business, a single telephone can accommodate inquiry calls from customers. However, a large company may have a plurality of departments and different telephones may be used depending on what is asked by customers.

In such a case, if each of such telephones is assigned a dedicated number and customers call a dedicated number appropriate for what they want to ask, the customer and the member company can talk on the phone as in the first embodiment.

When there are a large number of telephones, however, many dedicated telephone numbers have to be accordingly set for a single member company, which can increase financial burden.

Thus, in this embodiment, a system is built that can attain similar advantage to that of the first embodiment without assigning multiple dedicated telephone numbers to a single member company even if the member company has a plurality of telephones for inquiries from customers.

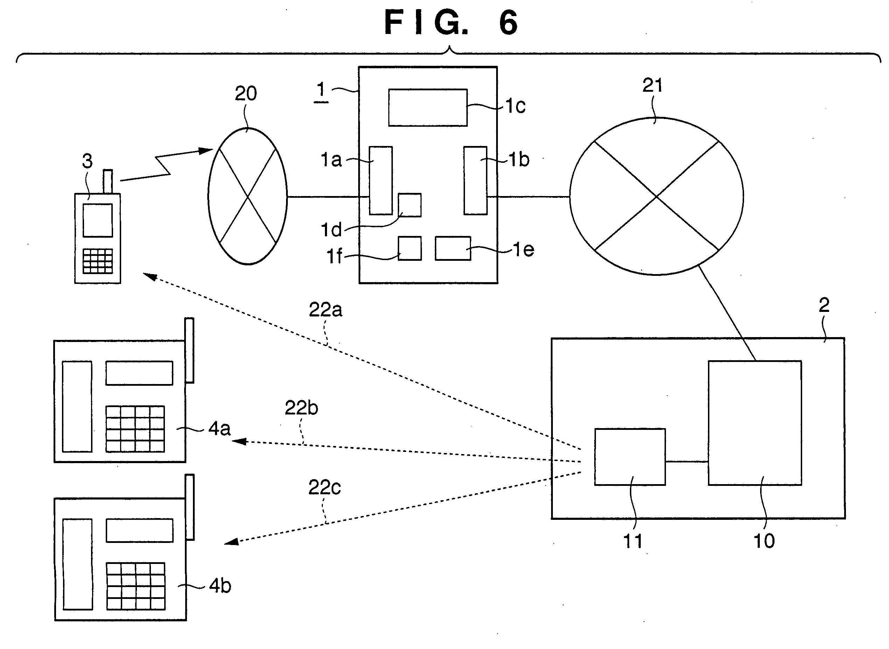

Figure 6 shows an overview of the configuration of this embodiment. This system is essentially similar to the first embodiment except that the server (1) has a voice message recording device (1e) for recording voice messages for each member company and a voice message play device (1f) for playing the voice messages recorded in the voice message recording device (1e) as audio, and that calls to a dedicated telephone number from customers are received by the server (1) and a telephone line is once connected between the customer's telephone (3) and the server (1). Reference numbers (4a) and (4b) denote telephones of a member company for responding to customers and there may be any number of the telephones.

At the time of membership registration, the member company provides the intermediary company with a plurality of telephone numbers (referred to as "contact phone numbers") to be used for accommodating customers' inquiries when it increases telephones for customer inquiries. The intermediary company stores in the database (1c) the dedicated telephone number, a plurality of contact telephone numbers of the member company, and IDs assigned to each of the contact telephone numbers as associated with each other.

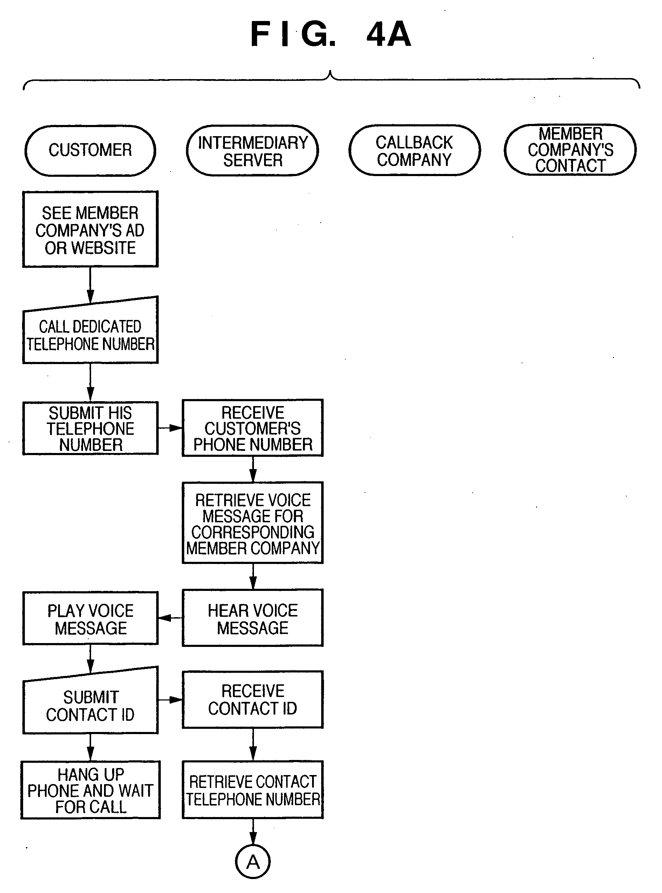

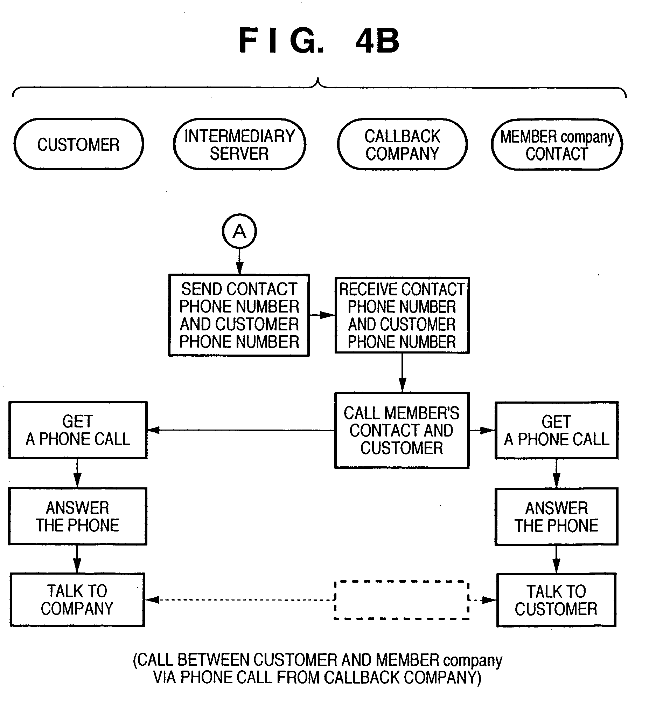

Figures 4A and 4B illustrate a general procedure that enables a customer (user) and a company to talk to each other on the phone in this embodiment.

As in the first embodiment, a member company provides a telephone number for making inquiries or an order on its website, advertisement, brochure, or handbill. Along with the telephone number, it gives instructions of how to use this speech communication system to customers.

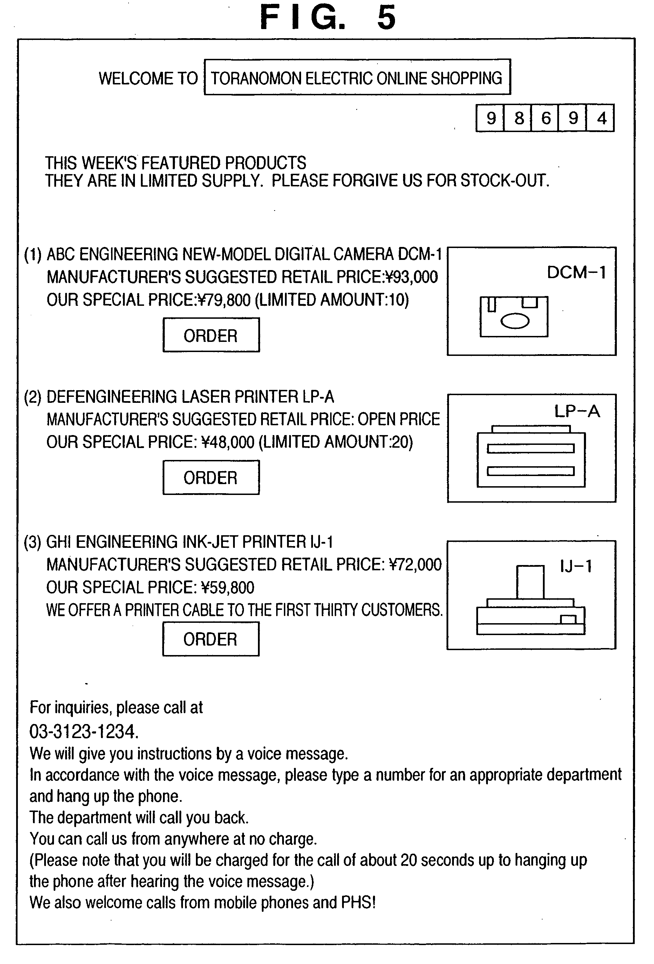

Figure 5 is an example of a website for online shopping for use in this embodiment, which shows the description and pictures of items, Order buttons, as well as a dedicated telephone number for inquiries and instructions of how to utilize this speech communication system.

The instructions of utilization should inform:
(A) A user will hear a voice message upon calling the specified telephone number.
(B) In accordance with the voice message, the user sends a contact ID.
(C) After sending the contact ID, hang up the phone.
(D) The user will be called back.
(E) The user will be charged only a communication fare for the initial call of a short duration.
(F) The user can call from a mobile phone and PHS as well.

The customer calls the dedicated telephone number from the telephone (3) upon viewing the advertisement or website. Then, unlike in the first embodiment, the call from the customer is received by the server (1) and connection is established between them. A communication fare will be charged due to the connection and the calling customer pays the communication fare as is conventional for regular telephone fee.

The server (1) can identify the member company from the dedicated telephone number that is being called. It then determines a voice message for the determined member company from the voice message recording device (1e) and plays the voice message through the voice message play device (1f).

The voice message being played back is sent to the customer's telephone via a telephone line and the customer will hear the voice message. The voice message gives a contact ID that identifies a telephone for a contact of the member company. The contact ID may be some combination of numbers and symbols that can be entered from a telephone.

Here is an example of the voice message; "Thank you for calling Toranomon Electric. If you'd like to inquire about desktop PCs, please push *1, about notebook PCs, push *2, about PC peripherals, push *3, and about digital cameras, please push *4 and hang up the phone. Our department in charge will call you back."

The customer enters a contact ID appropriate for his/her inquiries on his telephone in accordance with the message (in the example above, if the customer wants to inquire about a notebook PC, the customer enters "*2") and hangs up the receiver.

Unlike the first embodiment, a telephone line is once connected between the customer's telephone (3) and the server (1) in this embodiment, and a communication fare will be charged for the time up to when the customer hangs up the phone after entering the contact ID. And the communication fare is charged to the calling customer.

However, the communication fare charged to the customer is quite small and thus hardly has negative impact on customer psychology since the duration for which the line is connected is a short time required for hearing the voice message and sending the contact ID.

If a toll-free telephone number is used as the dedicated telephone number and the member company pays the communication fare, the customer will be charged no fee. In this case, communication fare charged to the member company is also small. This also applies to the third embodiment to be mentioned later.

The server (1) searches the database (1c) with the dedicated telephone number used for the communication and the contact ID sent from the customer's telephone (3) as keys to retrieve a telephone number corresponding to the contact ID for a contact (contact telephone numbers) of the member company to which the dedicated number is assigned.

The reason why the dedicated telephone number is used as a key for search in addition to the contact ID is that it is assumed that the same contact ID might be set for different member companies. Thus, if all the member companies use unique IDs rather than using potentially redundant IDs, a contact telephone number could be retrieved only with a contact ID without having to identify a member company by a search with a dedicated telephone number. However, setting unique IDs requires contact IDs to have more digits and thus be complicated, which can lead to cumbersomeness for customers or typing errors. In this embodiment, the dedicated telephone number is thus used in addition to the contact ID so that contact IDs themselves can be made as simple as possible.

The server (1) sends the contact telephone number thus obtained and the telephone number of the customer's telephone (3) obtained by the caller telephone number detection device (1d) as in the first embodiment to the reception relay device (10) of the callback company via the Internet (21). The subsequent process is similar to the first embodiment: in response to the directions from the reception relay device (10), the telephone exchange (11) calls the member company's contact telephone number and the telephone number of the customer's telephone (3), and when both the parties answer the phone, it connects a line between them.

Reference numbers (22b) and (22c) in Figure 6 represent calls to contact telephones (4a) and (4b) of the member company.

In this embodiment, although customers are charged a communication fare for a call of a short duration, customers can be connected to a plurality of contact telephones of a member company even if only one dedicated telephone number is assigned to each member company. There is an advantage for customers in that they can make inquiries to a contact that is specialized for what they want to ask and are not undesirably "bounced from section to section" within a member company.

The assignment of a plurality of contact telephones in a member company is not limited to assignment by contents of inquiries but other ways are possible. For example, the member company can provide contact telephones for "urgent inquiry" and ones for "not urgent" depending on the degree of urgency of call. In this case, most customers will likely select "urgent" when there is little difference in benefit for the customers between choosing "urgent" and "not urgent". Accordingly, provision of benefit for customers for selecting "not urgent", e.g., "fee discount", "additional point", "free gifts", can motivate customers to choose "not urgent" except those who really need an immediate response.

### [Third Embodiment]

In this embodiment, a single member company has a plurality of contact telephones as in the second embodiment. However, this embodiment does not have functionality of recording and playing a voice message for conveying a contact ID to the user on the telephone (3) as is the case in the second embodiment.

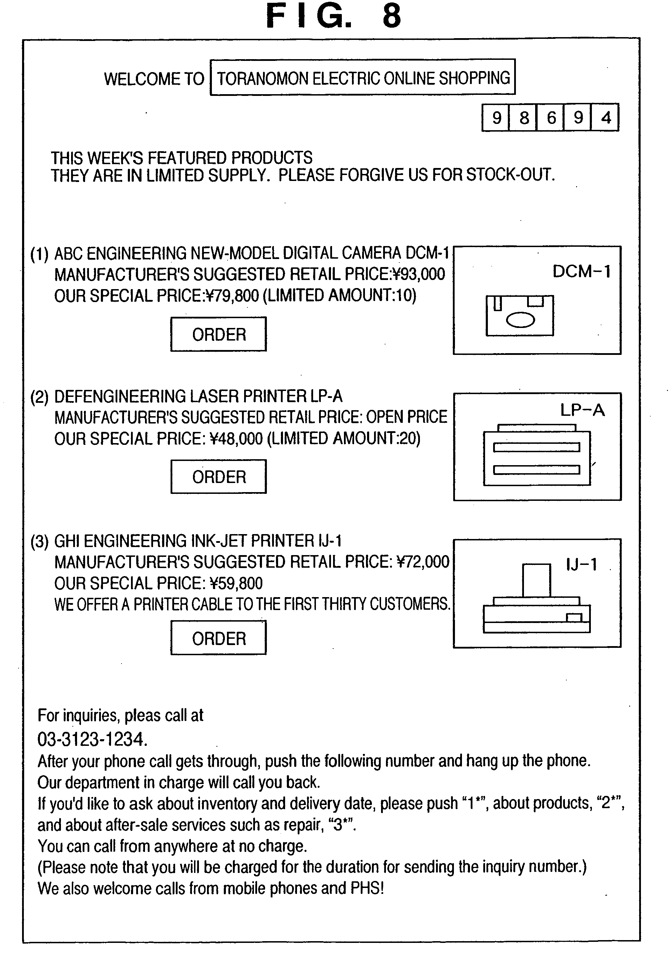

In this embodiment, instead of giving an audio indication of a contact ID to the user's telephone, a contact ID is specified on a member company's advertisement or website in advance that gives information similar to the voice message of the second embodiment. This allows users to know a contact ID for a department to which the users want to make inquiries by seeing the advertisement or website. Figure 8 shows an example of a website screen used in the embodiment.

Instructions for utilizing the system given on the website should inform:
(A) A contact ID display.
(B) The user chooses a contact ID appropriate for what he/she wants to ask.
(C) The user calls the specified telephone number, sends the contact ID, and hangs up the phone.
(D) The user will be called back.
(E) The user will be charged only a communication fare for the initial call of a short duration.
(F) The user can call from a mobile phone and PHS as well.

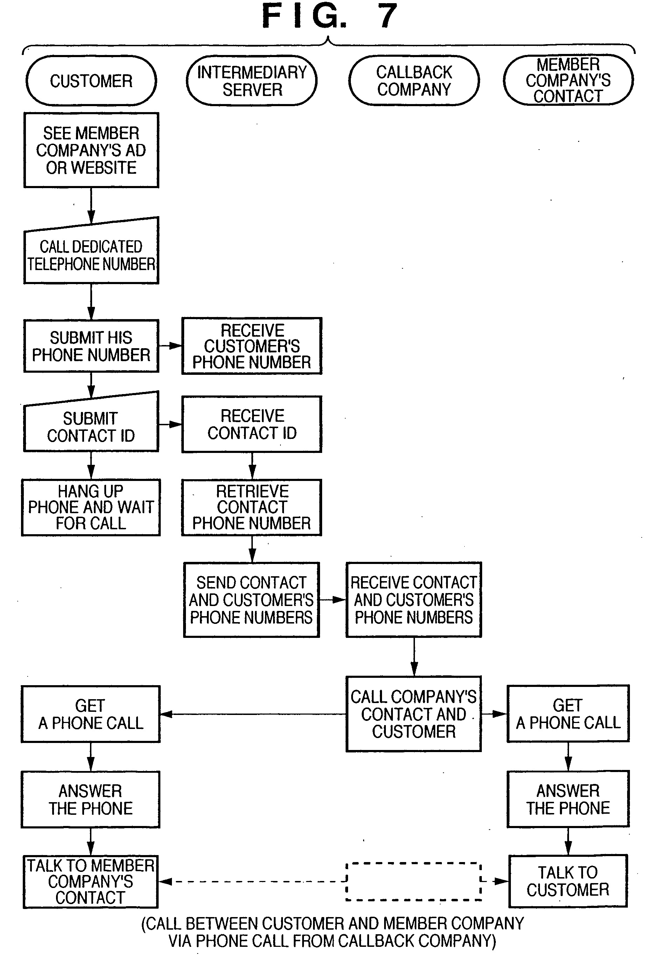

Figure 7 shows a general flow of the third embodiment. The customer calls a dedicated telephone number of a member company as in the second embodiment. Upon the call being received by the server (1), the customer sends a desired contact ID to the server (1) and disconnects the connection.

Subsequently, just as in the second embodiment, a contact telephone number is retrieved from the database by way of the dedicated telephone number and the contact ID, and sent to the reception relay device of the callback company via the Internet together with the telephone number of the user's telephone. Then, the user's telephone and the contact telephone of the member company are called by the telephone exchange of the callback company, and when both the parties answer the phone, they can talk to each other on the phone.

Advantages over the second embodiment include the ability to simplify the configuration of the server (1) due to elimination of the voice message recording device (1e) and voice message play device (1f) and the ability to shorten the duration of call between the customer's telephone (3) and the server (1) and further reduce communication fare to be charged to the customer because the customer can hang up the phone after sending a contact ID without having to hear a voice message.

### [Fourth Embodiment]

This embodiment is a variation of the embodiments described above. In any of the embodiments, although a callback company calls the telephones of the customer and the member company, a line is not connected between them until both the parties answer the phone.

Thus, someone might call the customer's telephone (3) during a short duration for which the customer waits for a callback after calling the dedicated telephone number. If that occurs, the customer's telephone becomes "busy" and cannot receive a call from the callback company (2), preventing a telephone call between the customer and the member company. This could also occur when radio wave condition becomes worse and the customer's telephone cannot temporally receive a call such as while the customer is traveling. In these situations, the customer need to call the dedicated telephone number again and wait for a callback.

In this embodiment, accordingly, the callback company again calls the customer and the member company if a line cannot be connected between the customer and the member company.

The ways of calling again include calling by the callback company (2) only and involving the server (1) as well.

In the case only the callback company (2) is responsible for calling again, the callback company (2) retains the telephone numbers to call, i.e., the telephone numbers of the customer and the member company, and calls again those telephone numbers after a predetermined time. To do this, it is necessary to have recording means for recording telephone numbers and re-call instruction means for instructing the callback company to call at a predetermined timing. These recording means and re-call instruction means may be a part of the reception relay device (10) or the telephone exchange (11), or may be provided as separate devices.

On the other hand, when the server (1) is also involved, when a line could not be connected, the callback company (2) sends a signal to the server (1) via the Internet (21) indicating the "failure of connection" and telephone numbers which were not connected to. At a predetermined time after receiving the signal, the server (1) sends the telephone numbers of the customer and the member company to the reception relay device (10) of the callback company (2) via the Internet. As the previous attempt, the reception relay device (10) again instructs the telephone exchange (11) to call the telephone numbers of the customer and the member company.

In any of the cases, the callback company calls again the customer and the member company after a predetermined time. Thus, a line will be more likely connected through re-calling even if the telephone of customer or the member company is busy or they cannot answer the phone due to being away from the phone at the first callback.

The duration after which a call is once stopped when the called party does not answer, a time interval of re-calling, and the maximum number of re-calling may be defined as appropriate. For example, if the definition is such that "a call is once stopped if connection cannot established after calling for 15 seconds; re-calling is attempted in 3 minutes; and re-calling can be attempted five times at most", the callback company calls every three minutes and stops calling if connection cannot be established after calling five times.

### [Fifth Embodiment]

This embodiment is also a variation of the embodiments described above, which considers a case where a member company receives inquiries from multiple customers at a time.

A member company that receives many inquires can receive inquiries from another customer while handling with inquiries from a customer by telephone. As a way for enabling concurrent handling of a number of customers, the member company can subscribe to a plurality of lines with a telephone company and assign telephone calls made to a representative phone number to a plurality of telephones and persons. For example, an after-sales service department of a manufacture may prepare 3 to 10 telephones and persons.

However, even though there multiple lines provided, another customer might call for inquiries while those lines are all in use. In that case, the customer who calls last cannot talk to the member company because the phone lines of the member company are already busy. Moreover, the customer cannot aware that phone lines of the member company are busy and thus continues to wait for a callback to become frustrated.

Of course, although re-calling by the callback company (2) as in the fourth embodiment may connect a line after a line of the member company becomes available, there is no way of knowing how long inquiries which are currently handled by the member company will last, and re-calling could be stopped after reaching its maximum number of re-calling.

Thus, this embodiment allows a customer who newly calls the dedicated telephone number to be informed that "the phone lines of the member company are busy and they cannot service the customer now" when the member company is already responding to other customers' phone calls.

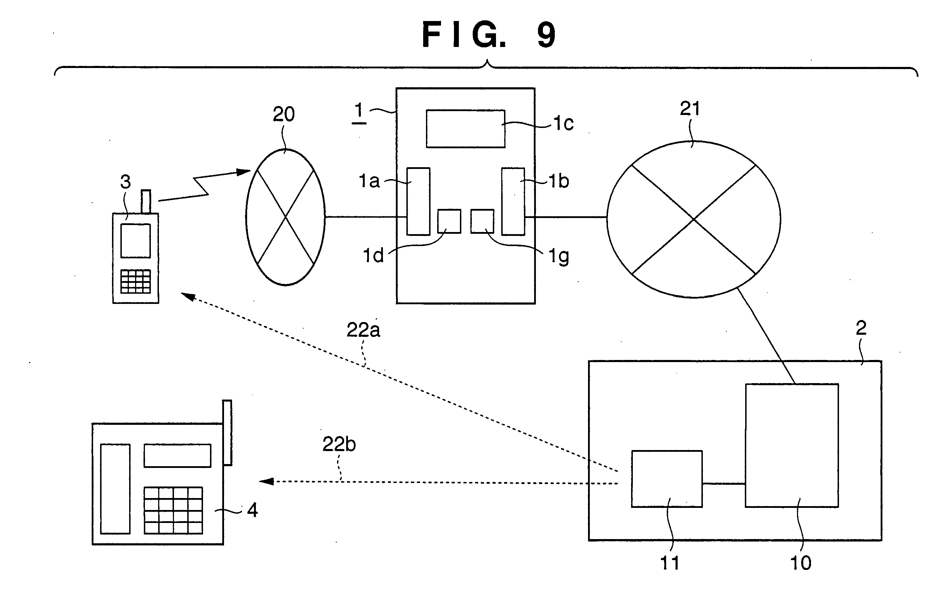

Figure 9 shows an overview of the configuration of this embodiment. It is essentially similar to the first embodiment except that the server (1) has a phone call status determination unit (1g).

At the time of membership registration, a member company registers with the intermediary company the number of telephone lines that it can handle at a time as "the number of possible concurrent calls". For instance, if a member company can handle five calls at a time, "the number of possible concurrent calls" is five. "The number of possible concurrent calls" which is registered is stored in the phone call status determination unit (1g) of the server (1).

The phone call status determination unit (1g) serves to determine availability of lines of each member company and also records "the number of current calls" of each member company. "The number of current calls" is a factor for determining how many calls a member company is now handling and will be zero "0" when the company is answering no telephone inquiries, will be one "1" when responding to one customer, two "2" when responding to two customers and so on, which will be described in detail later. The phone call status determination unit (1g) further includes means for comparing "the number of possible concurrent calls" with "the number of current calls".

"The number of current calls" recorded in the phone call status determination unit (1g) varies depending on information from the callback company (2). Once a line is connected between the customer and the company, the callback company (2) sends to the server (1) a signal indicating "the line connection" together with the connected telephone numbers via the Internet (21). And when conversation between the customer and the company ends and the connection is disconnected, the callback company (2) sends to the server (1) a signal indicating "the line disconnection" along with the telephone numbers that have been connected via the Internet (21). Although the reception relay device (10) of the callback company includes the capability of sending such information from the callback company (2) to the server (1) in this embodiment, a separate device dedicated for it may be provided. The telephone number of a member company is typically used as the telephone number that is sent for determining the number of current calls, however, a user's telephone number may be used if the server (1) has means for matching users' telephone numbers with member companies' phone numbers.

Upon the server (1) receiving the telephone numbers and the signal indicating "the line connection" or "the line disconnection" from the callback company (2), the phone call status determination unit (1g) updates the number of current calls for the appropriate member company based on the received signal.

That is, a member company can be identified from its telephone number. And every time it receives a signal indicating "the line connection", it adds "1" to the number of current calls for the corresponding member company. Also, every time it receives a signal indicating "the line disconnection", it subtracts "1" from the number of current calls for the corresponding member company. In this way, the recorded number of current calls is equal to the number of phone calls being answered by a member company.

With such a scheme, the server (1) can determine whether all the registered number of lines for each member company are in use or not by having the phone call status determination unit (1g) compare "the number of current calls" with "the possible concurrent calls".

That is, if "the number of current calls" is less than "the number of possible concurrent calls", the server (1) determines that "there are lines available for connection" and performs processing for callback in the manner same as the embodiments described above. And when "the number of current calls" reaches "the number of possible concurrent calls", the server (1) determines that "all the lines are in use" and runs ring tone indicating the lines being "busy" in response to calls from customers, without performing processing for callback.

As an example, if a member company can handle five simultaneous telephone calls, a regular ring tone is played when the number of current calls is "0", "1", "2", "3", or "4", and a callback is normally made. When the number reaches "5", however, the phone call status determination unit determines that the member company's capacity has been reached, and while the number of current calls remains "5" (i.e., the number equals the number of possible concurrent calls), the server (1) plays "busy" ring tone and does not allow any new call from a customer to be received by the member company, without performing any processing for callback.

A customer can know that the phone lines of the member company are busy upon hearing the "busy" ring tone so that he/she calls back at a later time. Accordingly, the customer need not indefinitely wait for a callback, which can avoid waste of customer's time and prevent the customer from being frustrated.

As an alternative to playing the "busy" ring tone, a phone call from a customer may be received and a voice message may be played such as "We are sorry that our lines are busy now. Please call again at a later time". However, since a communication fare will be applied for the duration of the voice message, play of the "busy" ring tone without receiving a phone call is preferable in terms of cost containment.

Although this embodiment has been describe with reference to the first embodiment about how to deal with phone calls in busy state, this is applicable to the second and third embodiment as well.

### [Sixth Embodiment]

This embodiment is a variation of the first embodiment. In the first embodiment, the server (1) identifies the member company's telephone number from a dedicated telephone number using the database (1c) and sends the telephone number to the callback company (2) via the Internet.

If the callback company (2) has such a database and can match dedicated telephone numbers with member companies' telephone numbers, however, the server (1) need not necessarily have the database (1c). This embodiment is a variation of the first embodiment where the callback company (2) has the database.

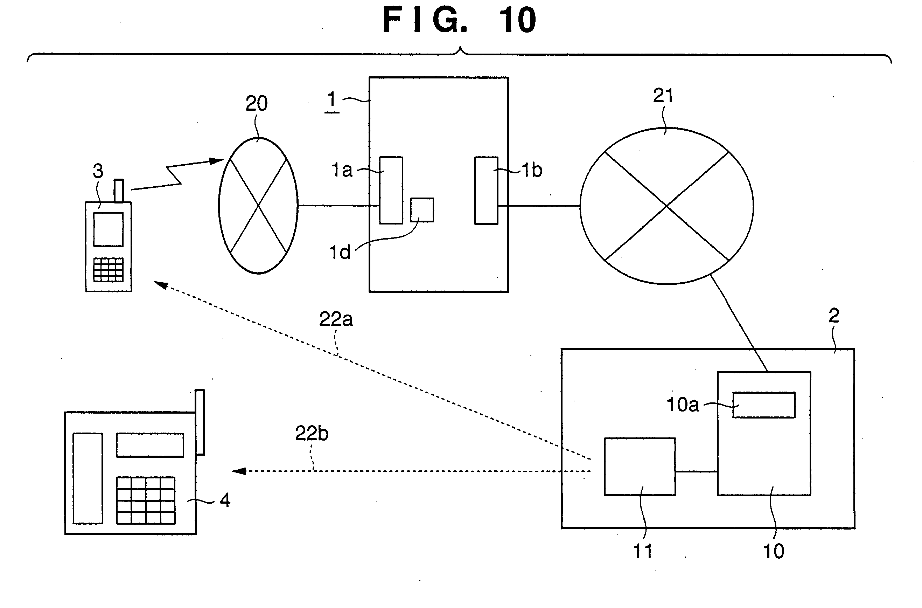

Figure 10 shows an overview of the configuration of the sixth embodiment. In the figure, reference number (10a) represents a database of the callback company (2) that records dedicated telephone numbers and telephone numbers of member company like the database of the server (1) of the first embodiment, capable of retrieving a telephone number of a member company by performing a search with a dedicated telephone number as a key. Registration to the database (10a) may be performed directly by a member company or by an intermediary company.

The database (10a) of the callback company (2) may be a portion of a reception relay device (10) as shown in Figure 10, or may be a portion of a callback company server that is separate from the reception relay device (10). Since the callback company (2) has the database (10a), the server (1) of the intermediary company need not include a database for telephone number matching. Thus, the server (1) of the intermediary company is not provided with a database in this embodiment.

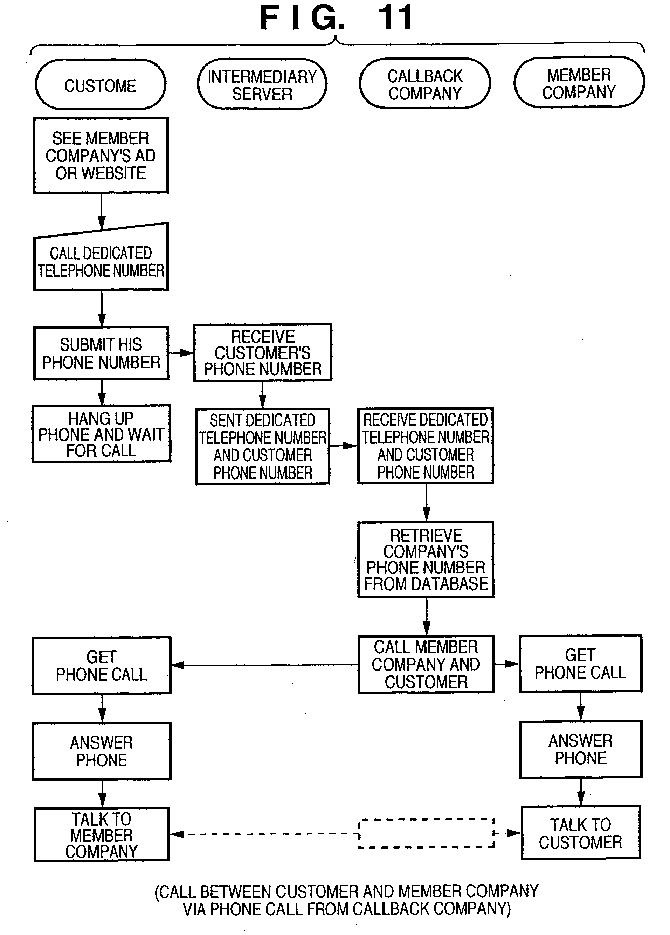

Figure 11 shows a flow of this embodiment. Operations made by a customer are in themselves the same as in the first embodiment. Unlike the first embodiment, the server (1) of the intermediary company sends a dedicated telephone number itself to the callback company (2) together with a customer's telephone number without making an query of a member company's telephone number from a dedicated telephone number.

The callback company (2) searches the database (10a) with the dedicated telephone number as a key to retrieve the telephone number of the appropriate member company. Subsequently, as in the first embodiment, it directs the telephone exchange (11) to call the telephone numbers of the member company and the customer, enabling telephone conversation between them.

As thus has been described, according to the speech communication system of the embodiment, a member company can respond to inquiries from mobile phones with no or little communication fare charged to customers. This motivates customers using a mobile phone to freely make inquiries or an order. What is more, the communication fare charged to the company is low enough not to be a heavy burden.

In addition, the customer's telephone number is not revealed to a company which the customer calls, so that the customer can call the company at ease concealing his/her personal information.

### [Seventh Embodiment]

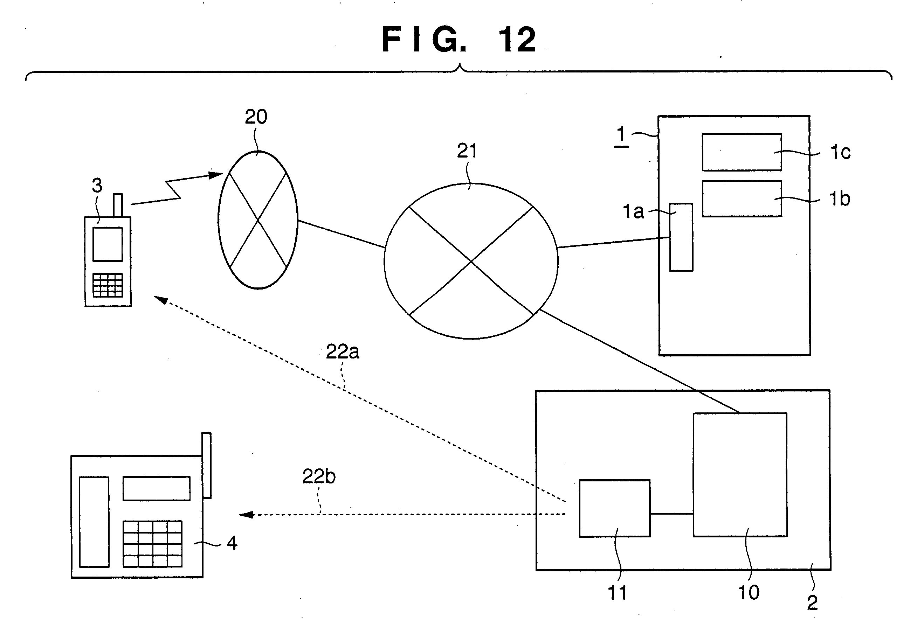

Figure 12 illustrates a configuration of a system according to the seventh embodiment of the invention. In the figure, reference number (1) represents a server provided by the callback company or an intermediary, being connected to the Internet (21) via a communication interface (1a) .

The server (1) can store webpages and also serves as an Internet server (web server). Reference number (1b) represents a website storing unit for storing webpages.

The server (1) further includes a database (1c) in which telephone numbers are stored. Telephone numbers stored in the database (1c) will be describe later.

The server (1) may be owned and managed by the callback company or may be a rent-a-server. Or, it may be owned, installed, and managed by an intermediary company that has a tie-up with the callback company.

The server (1) may be physically a single computer or may consist of a number of computers among which roles are distributed. Although for clarity Figure 12 shows the communication interface (1a), web page storing unit (1b), and the database (1c) within the server (1), they need not necessarily be included within a computer that serves as the server (1) but it is sufficient that they collectively function as a portion of the server by being connected to the computer even if they are physically separate from the computer. Alternatively, a single device may have functions for a number of devices.

The server (1) may be located in a country where members are present, in a country where the callback company is present, or in a third country other than those.

Reference number (2) represents a callback company. The callback company (2) has a reception relay device (10) and a telephone exchange (11). The callback company is typically a company of a country where communication fares are low, however, it may be a domestic company that has a tie-up with such an oversea company. The reference number (10) represents a reception relay device of the callback company (2), capable of communicating information with the server (1) via the Internet (21). The reception relay device (10) is connected to the telephone exchange (11).

The telephone exchange system (11) can call a plurality of specified telephone numbers to connect lines in accordance with directions from the reception relay device (10).

Reference number (3) denotes a mobile phone of a member user. Reference number (4) represents the called party's telephone, whether a fixed-line telephone or a mobile phone.

Also in this system, a user should make membership registration beforehand. At registration, the user registers payment information such as his/her credit card number and its expiration date as well as his address, name, contact, and the telephone number of the mobile phone being used.

When the registration is complete, a webpage for the member's mobile phone (hereinafter "a dedicated web page") is created and stored in the server (1). This means that the server (1) also serves as a web server. And the registered member's telephone number and the URL of the member's web page are stored in the database (1c) as correlated with each other.

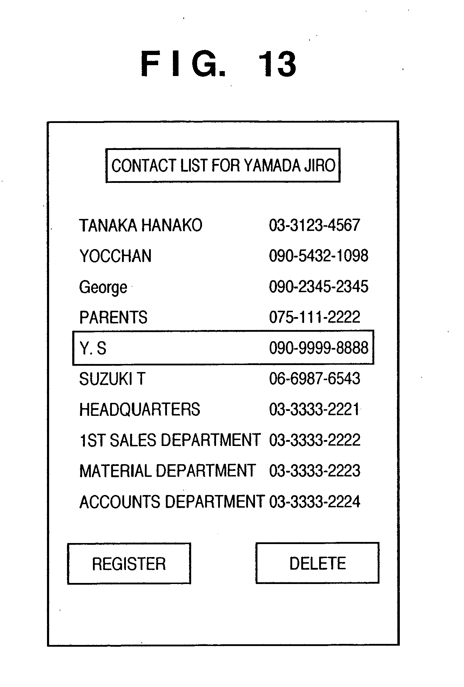

Figure 13 shows an exemplary screen of a dedicated web page. Immediately after the creation, information on called parties is not registered and the member accesses his webpage to register such information by his own. This registration is typically made through a mobile phone, however, one can access the web page and make registration through a terminal such as a personal computer if necessary.

At registration, the user selects "Register" on the dedicated web page screen, and enter and submit a telephone number and a name of a called party. The name may be last name, first name, nickname, initials, abbreviation, department and the like as long as it can identify the called party.

The called party thus registered is displayed as a list on the dedicated web page. In such a manner, the user can register beforehand called parties to which he/she will make a telephone call via callback. The number of called parties one can register is not limited and the user can view all the called parties by scrolling the screen when a single screen of the dedicated web page cannot show all the called parties.

To delete a registered called party from the list of called parties, the user selects "Delete" and chooses any registered called party for deletion.

In this way, members can freely add and delete called parties to and from his own dedicated web page.

To make a call, the member accesses his dedicated web page that is informed beforehand using a mobile phone. Then, a screen as that shown in Figure 13 is displayed. On the screen, the member selects a called party with a scroll button of the mobile phone and submits it. After submitting the called party, the member hangs up the phone and waits for a callback.

The database (1c) of the server (1) stores members' dedicated web pages associated with registered members' telephone numbers and can retrieve a telephone number for a corresponding member by performing a search with the URL of a dedicated web page as a key.

The server (1) then retrieves the telephone number of the member who uses the dedicated web page by way of the URL of the web page being accessed. And it retrieves the telephone number of the called party that the member selected on the dedicated web page.

The server then sends information including the telephone numbers of the member and the called party thus obtained to the callback company over the Internet.

In a case the callback company requires a member's password at the time of callback, the server (1) may store individual member's passwords in advance and sends a password to the callback company in addition to the telephone numbers.

The reception relay device (10) of the callback company (2) receives the information on the telephone numbers of the member and the called party from the server (1) over the Internet (21). It then sends directions to the telephone exchange system (11) to call the telephone numbers of both the member and the called party based on the received information.

The telephone exchange system (11) calls the telephones (3) and (4) of the member and the called party, respectively, and when both the parties, i.e., the member and the called party, answer the phone (become connected), a line is initially connected between them and they can talk to each other on the phone.

After the connection of a telephone line, a communication fare applied in the country via which the callback is made will be charged. In other words, no communication fare is charged until both the parties start conversation. A telephone line is of course used when the server (1) sends information on the telephone numbers to the callback company (2) utilizing the Internet (21), however, no additional communication fare is charged because connection to the Internet is always-on connection on a flat-fee basis.

Communication fare for calls from overseas, even to a mobile phone, are quite lower than domestic communication fare for mobile phones, so that members can respond to calls from mobile phones at a low cost, which lessens financial burden.

Although the callback company calls the telephones of a member and the called party in this embodiment, a line is not connected until both the parties answer the phone. Thus, someone else might call the customer's telephone (3) during a short time for which the member waits for a callback, or the called party's line might be busy. In those situations, a call from the callback company (2) cannot be received and the member and the called party cannot talk on the phone. This can also occur when radio wave condition of a mobile phone worsens and a mobile phone cannot temporarily receive calls such as when a customer is traveling. In such situations, the member need access the dedicated web page again and wait for a callback.

Thus, when a line could not connected between the member and the called party, the callback company preferably calls the member and the called party again.

The callback company (2) may re-call on its own or may involve the server (1) as well.

In the case the callback company (2) calls the parties again on its own, when a line could not be connected, the callback company (2) retains the called telephone numbers, i.e., the telephone numbers of the member and the called party, and calls again those telephone numbers after a predetermined time period. To do this, it is necessary to have recording means for recording the telephone numbers and re-call instruction means for directing calls at a given timing. These recording means and re-call instruction means may be a part of the reception relay device (10) or the telephone exchange system (11), or may be provided as separate devices.

On the other hand, when the server (1) is also involved, when a line could not be connected, the callback company (2) sends to the server (1) a signal indicating "the failure of line connection" and the telephone numbers that could not be connected via the Internet (21). At a predetermined time after receiving the signal, the server (1) sends the telephone numbers of the member and the called party again to the reception relay device (10) of the callback company (2) over the Internet. As the previous calling, the reception relay device (10) again instructs the telephone exchange system (11) to call the member and the called party.

In any of the above cases, the member and the called party are called again by the callback company after a predetermined time. Thus, even if the line of the member or the called party is already busy at the time of callback or they cannot answer the phone due to being away from the phone, a line will more likely be connected when they are again called.

The duration after which a call is once stopped when the party being called does not answer, an interval of re-calling, and the maximum number of re-calling may be defined as appropriate. For example, if the definition is such that "a call is once stopped if a connection cannot established after calling for 15 seconds; re-calling is attempted in 3 minutes" and re-calling can be attempted five times at most, the callback company calls every three minutes and stops calling if connection cannot be established after calling five times.

According to this embodiment, a speech communication system can be provided that allow a caller to easily and correctly call a desired party when making a phone call from a mobile phone utilizing callback.

### [Eighth Embodiment]

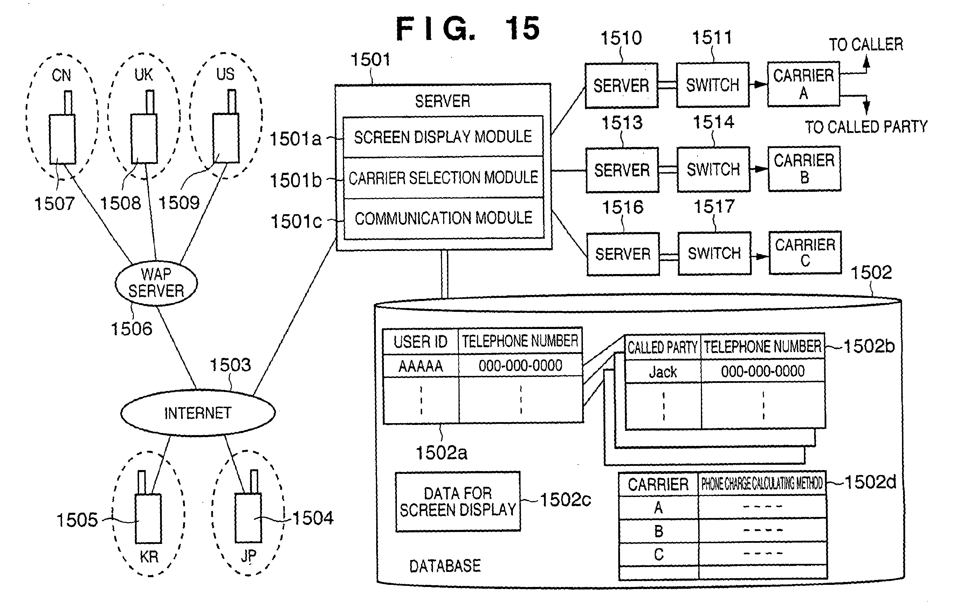

Now, the eighth embodiment of the server according to the invention will be describe with Figure 15. Figure 15 shows a communication system that can provide the server according to the invention.

### <System Configuration>

In the system shown in Figure 15, the server 1501 is a web server that operates integrally with the database 1502 and is connectable to the Internet 1503.

This enables a mobile phone 1504 for Japanese carriers that utilizes i-mode® or J-SKY Web® comprising a HTML browser and a mobile phone 1505 that utilizes Korean carriers to directly access the server 1501 via the Internet 1503.

On the other hand, mobile phones 1507 to 1509 comprising a WAP browser designed for Chinese, British, and U.S. communication carriers can access the server 1501 via a WAP (Wireless Application Protocol) server 1506.

While the above description refers to calls from Japan, Korea, China, UK, and United States, the present invention is not limited to this, but the service according to the invention is available for making a phone call using a mobile phone from all over the world: nations in Europe, Singapore, Taiwan, Malaysia, Thai, Philippine, India, Australia, New Zealand, Brazil etc.

The server 1501 can communicate via a switch server (a server for an exchange) 1510, switch server 1513, switch server 1516, and a dedicated line (alternatively, the Internet, unless there is security concerns). The switch server 1510 can control the switch 1511 in response to external commands. The owner of the switch 1511 has a contractual relationship with carrier A and pays a communication fare to the carrier A so as to enable communication with telephones all over the world. The switch 1511 also supports a general callback service, capable of calling two called parties and connecting a line between them.

With such capabilities, when the server 1501 sends the switch server 1510 two telephone numbers to be called and a command to originate a call, the switch server 1510 interprets the command to control the switch 1511 and calls each of the telephone numbers via the carrier A to connect a line between them, offering a telephone call between the two called parties.

This relation between the switch server 1510, switch 1511, and carrier A is also the same as between the switch server 1513, switch 1514, and carrier B, and between the switch server 1516, switch 1517, and the carrier C. That is, switch servers 1513 and 1516 have substantially the same configuration as the switch server 1510, and switches 1514 and 1517 have substantially the same configuration as the switch 1511.

Although the server 1501 here is described as a general web server, the invention is not limited to this: the server 1501 may be a WAP server designed for mobile phones that perform communication using WAP. In that case, the data for screen display is written in WML (Wireless Markup Language).

### <Service Provision Operation>

When the server 1501 is accessed by a mobile phone, a screen display module 1501a first reads data for a screen prompting the user to enter his user ID and password from the screen display data 1502c in the database 1502 and sends the data to the mobile phone to display a dialogue on the mobile phone screen.

The user of the mobile phone enters his user ID and password by operating buttons and sends them to the server 1501.

If the server 1501 has a configuration that can automatically retrieve identification information from a mobile phone, entry of a user ID is not necessary. Meanwhile, it is also possible to eliminate the entry of a password.

Upon obtaining identification information such as the user ID and the password, the server 1501 determines the telephone number of the accessing mobile from the identification information and presents a list of called parties' telephone numbers associated with the identification information to the mobile phone.

Specifically, the server 1501 searches for a telephone number from the user ID by making a reference to the table 1502a in the database 1502. In addition, a pointer to the table 1502b has been registered for the user ID and the server 1501 reads out a list of called parties' telephone numbers from the table 1502b that are registered by the user as called parties.

Then, in response to the user ID being entered, the server 1501 sends back the called party list to the mobile phone to be displayed on the mobile phone screen. The mobile phone user selects a party he wants to call from the list by operating buttons and the like viewing the screen.

After receiving identification information for the called party from the mobile phone, the server 1501 then determines which carrier is least expensive for making a call to the mobile phone (the caller) and the called party. This determination is made by the carrier selection module 1501b making a reference to the table 1502d, which stores methods of calculating communication fares for different carriers. The Table 1502 has message accounting for each carrier store thereon. By approximately calculating a communication fare for calling from the switch to the caller and called party utilizing those carriers and comparing them, the carrier selection module 1501b determines the least expensive carrier.

Then, the server 1501 sends two telephone numbers to be called corresponding to the caller and the called party and a call command to the switch server associated with the selected carrier. That is, when carrier A is to be utilized, the server 1501 sends a call command to the server 1510, and when carrier B, to the server 1513, and when carrier C, to the server 1516.

Alternatively, the server 1501 may indicate the telephone numbers of the caller and the called party to the switch server 1510 by sending data written in XML. Also, the server 1501 may receive information specifying a carrier from a mobile phone and sends two telephone numbers to call to the switch server corresponding to the specified carrier.

Upon receiving the command and the telephone numbers to be called, the server 1510 controls the switch 1511 to call the telephone numbers, and when the calls are received by both telephones, it connects a line between them to enable conversation on the phone.

That is, in order for the switch to call the caller's telephone number and the called party's number, the server 1501 sends those telephone numbers to any of the servers 1510, 1513, and 1516.

While in the discussion above, the server 1501 sends web contents via the Internet, the invention is not limited to this. For instance, it is also possible that the server 1501 receives a mail from a mobile phone, analyzes the mail and informs the switch of two telephone numbers to be called. The server 1501 may have a mailer for receiving a mail from a mobile phone and a table that maps the mail addresses of mobile phones to telephone numbers so that it can determine the caller and called party's telephone numbers from the contents of the mail received. And a user who wants to utilize this system is instructed beforehand to enter a telephone number he wants call in the subject field of a mail, and the server 1501 may identify the called party by referring to the subject. Alternatively, an agreement is made with a user that the user enters his telephone number in the subject field of a mail and types a telephone number he wants to call in the main body, so that the server 1501 may retrieve the caller and the called party's telephone numbers by analyzing the subject field and the main body.

As has been described thus far, according to the embodiment, communication between mobile phones or between a mobile phone and a fixed-line phone located all over the world can be made at a quite low cost. For example, while an oversea call from China to Japan using a mobile phone would presently cost 200 yen per minute, using the system of this embodiment, one can make a telephone call for almost the same fee (about 60 yen/min) as when making an oversea call from a mobile phone in Japan to China.

In addition, in accordance with the embodiment, the system may be utilized in such a way that a company subscribes to the server 1501 described above and registers a list of telephone numbers of clients in the database 1502, and gets IDs for employees to utilize the server 1501. This eliminates the necessity of registering business telephone numbers to a mobile phone for personal use when one makes a business telephone call from his personal mobile telephone. In addition, the company need not distribute mobile phones for business use to employees nor check their phone usage history. Since telephone calls related to business and private telephone calls can be specifically distinguished so that both the company and employees can pay communication fare without complaint if the company pays all communication fare for phone calls utilizing the system.

Also, utilizing the system according to the embodiment, a user can utilize various carriers regardless of the type of a mobile phone owned by the user. As an example, even for communication between mobile phones of NTT docomo®, if a telephone call is made to the mobile phones of both the parties from a switch of Vodafone® utilizing the system, only the call by Vodafone® will be charged. Accordingly, the mechanism of the system allows provision of still more various services using mobile phones.

## Claims

1. A speech communication system, comprising a server that is connected to a telephone line and the Internet and a reception relay device that is connected to the Internet and a telephone exchange, **characterized in that** the server has
a database that stores a member's telephone number associated with a dedicated telephone number individually assigned to the member; and
a caller telephone number detection device that determines the telephone number of a user's telephone without answering the phone when a call is made from the user's telephone to the dedicated telephone number;
the server retrieves the member's telephone number by searching said database with a dedicated telephone number that was called as a key, sends information including at least the member's telephone number and the telephone number of the user's telephone to said reception relay device via the Internet after the call from said user's telephone is hung up,
the reception relay device, after receiving the information including the member's telephone number and the telephone number of the user's telephone numbers sent from said server, calls the member's telephone number and the telephone number of the user's telephone using said telephone exchange, and, when both the member and the user answer the phone, connects a telephone line between them to allow the parties to talk on the phone.

2. A speech communication system, comprising a server that is connected to a telephone line and the Internet and a reception relay device that is connected to the Internet and a telephone exchange, **characterized in that**
the server comprises
a database that stores a dedicated telephone number individually assigned to each member associated with a plurality of contact telephone numbers used by the member to respond to telephone inquiries and with a contact ID; and
a caller telephone number detection device that determines the telephone number of a user's telephone when a dedicated telephone number is called by the user's telephone,
the server searches said database with a dedicated telephone number that was called and a contact ID that is sent from the user's telephone through the telephone line as keys to retrieve a contact telephone number for which the ID of the member assigned with the dedicated telephone number is set, and sends information including at least the contact telephone number of the member and the telephone number of the user's telephone to the reception relay device via the Internet after the telephone line with said user's telephone is disconnected, and
the reception relay device, after receiving the information including the contact telephone number and the telephone number of the user's telephone sent from said server, uses said telephone exchange to call the contact telephone number and the telephone number of the user's telephone, and when both the telephone using the contact telephone number and the user's telephone answer the phone, connects a telephone line between them to allow the parties talk.

3. A speech communication system, comprising a server that is connected to a telephone line and the Internet and a reception relay device that is connected to the Internet and a telephone exchange, **characterized in that**
the server has
a database that stores a dedicated telephone number individually assigned to each member associated with a plurality of contact telephone numbers that are used by the member for responding to telephone inquiries and with a contact ID;
a caller telephone number detection device that determines the telephone number of the user's telephone when the dedicated telephone number is called by the user's telephone;
a voice message recording device that records a voice message about a contact ID as associated with a dedicated telephone number; and
a voice message play device that can play a voice message to convey it as audio to a called party,
the server can communicate a voice message that is associated with a dedicated number to a user's telephone through a telephone line when a call to the dedicated telephone number is answered;
the server searches said database with the called dedicated telephone number and a contact ID that is sent from the user's telephone through the telephone line as keys to retrieve a contact telephone number for which the contact ID of the member assigned with the dedicated telephone number is set, and sends information including at least the contact telephone number and the telephone number of the user's telephone to said reception relay device over the Internet after the telephone line with the user's telephone is disconnected;
the reception relay device, after receiving the information including contact telephone number and the telephone number of the user's telephone sent from said server, calls the contact telephone number and the telephone number of the user's telephone using said telephone exchange, and when both the telephone for the contact using the contact telephone number and the user's telephone answer the call, connects a telephone line between them to allow the both parties to talk on the phone.

4. The speech communication system according to any of Claim 1 to 3, **characterized in that** the reception relay device and the telephone exchange are managed by a callback company.

5. A speech communication system server, said server is connected to a telephone line and the Internet, **characterized in that** comprising
a database that stores a member's telephone number associated with a dedicated telephone number individually assigned to the member; and
a caller telephone number detection device that determines the telephone number of a user's telephone without answering the phone when a call is made from the user's telephone to the dedicated telephone number,
the server can retrieve the member's telephone number by searching said database with the dedicated telephone number as a key when the dedicated telephone number is called and after the call from the user's telephone is hung up, send information including at least the member's telephone number and the telephone number of the user's telephone to the reception relay device of a callback company via the Internet so that it prompts the reception relay device to call both the member's telephone number and the telephone number of the user's telephone to connect a telephone line between them.

6. A speech communication system server, said server is connected to a telephone line and the Internet, comprising
a database that stores a dedicated telephone number individually assigned to each member as associated with a plurality of contact telephone numbers used by the member for responding to telephone inquiries and with a contact ID; and
a caller telephone number detection device that determines the telephone number of the user's telephone when a call is made from the user's telephone to the dedicated telephone number, **characterized in that**
the server, when a contact ID is sent from the user's telephone to the dedicated telephone number through the telephone line, can search said database with the dedicated telephone number and the contact ID as keys to retrieve a contact telephone number for which the contact ID for the member assigned with the dedicated telephone number is set, and
after the telephone line with said user's telephone is disconnected, send information including at least the contact telephone number and the telephone number of the user's telephone to the reception relay device of a callback company via the Internet so as to prompt the reception relay device to call both the contact telephone number and the telephone number of the user's telephone to connect a telephone line between the both parties.

7. A speech communication system server, said server is connected to the telephone line and the Internet, comprising:
a database that stores a dedicated telephone number individually assigned to each member as associated with a plurality of contact telephone numbers used by the member for responding to telephone inquiries and with a contact ID;
a caller telephone number detection device that determines the telephone number of a user's telephone when a call is made from the user's telephone to a dedicated telephone number;
a voice message recording device that records a voice message including information on a contact ID as associated with a dedicated telephone number; and
a voice message play device that can play a voice message and convey it as audio to a called party,
**characterized in that**
the server can play said voice message associated with a dedicated telephone number and send it to a user's telephone through a telephone line when a call from the user's telephone to the dedicated telephone number is received,
search said database with the dedicated telephone number and the contact ID as keys when the contact ID is sent from the user's telephone through the telephone line so as to retrieve a contact telephone number for which the contact ID of the member assigned the dedicated telephone number is set,
send information including at least the contact telephone number and the telephone number of the user's telephone to the reception relay device of a callback company via the Internet after the telephone line with the user's telephone is disconnected so as to prompt the reception relay device to call both the contact telephone number and the telephone number of the user's telephone to connect a telephone line between the both parties.

8. A reception relay device for a speech communication system, said reception relay device is connected to the Internet and the telephone exchange, **characterized in that**, when it receives information including two telephone numbers sent from the predetermined server via the Internet, it can cause said telephone exchange to call both the received telephone numbers, and when both the parties answer the phone, to connect a telephone line between them to allow the parties to talk on the phone.

9. The speech communication system according to any of Claims 1 to 3, **characterized in that** the server has a phone call status determination unit, **characterized in that**
the phone call status determination unit can record the number of telephone lines that each member can handle at a time as "possible concurrent calls" and the number of currently busy telephone lines for each member as "the number of current calls", and compare "the possible concurrent calls" with "the number of current calls",
when a user makes a call to the member's dedicated telephone number, if the member's "possible concurrent calls" is equal to "the number of current calls" it does not send information on telephone numbers to said reception relay device, and
it sends ring tone or a voice message to the user's telephone indicating that the phone lines of the member are busy.

10. The speech communication system according to Claim 9, **characterized in that** said "the number of current calls" is controlled to be always equal to the number of telephone calls currently accepted by each member based on information on phone call status sent from the reception relay device over the Internet.

11. The speech communication system server according to any of Claims 5 to 7, comprising a phone call status determination unit that can record the number of telephone lines that each member can handle at a time as "possible concurrent calls" and the number of currently busy telephone lines for each member as "the number of current calls" and compare the "possible concurrent calls" with "the number of current calls",
**characterized in that**
"the number of current calls" recorded in the phone call status determination unit is controlled to be always equal to the number of current calls for each member based on information on call status sent from the reception relay device via the Internet,
and, when a user makes a call to the member's dedicated telephone number, if the member's "possible concurrent calls" is equal to "the number of current calls", it sends ring tone or a voice message to the user's telephone indicating that the phone lines of the member are busy without sending information on telephone numbers to the reception relay device.

12. The speech communication system according to any of Claims 1 to 3, **characterized in that** when said telephone exchange cannot connect a telephone line after calling the member's telephone number and the telephone number of the user's telephone, the telephone exchange calls both the telephone numbers again after a predetermined time period.

13. A speech communication system, comprising a server that is connected to a telephone line and the Internet and a reception relay device that is connected to the Internet and a telephone exchange, **characterized in that**
the server has a caller telephone number detection device that determines the telephone number of a user's telephone without answering the phone when a call is made from the user's telephone to the dedicated telephone number,
the server can send information including at least the dedicated telephone number and the telephone number of the user's telephone to said reception relay device via the Internet after the call from the user's telephone is hung up,
the reception relay device has a database that stores a member's telephone number associated with a dedicated telephone number assigned to the member,
after receiving the information including the dedicated telephone number and the telephone number of the user's telephone sent from said server, the reception relay device searches the database with the dedicated telephone number as a key to retrieve the member's telephone number, calls the member's telephone number and the telephone number of the user's telephone using said telephone exchange, and when both the parties answer the phone, it connect a telephone line between them to allow the parties to talk on the phone.

14. A speech communication system server, said server is connected to a telephone line and the Internet, having a caller telephone number detection device that determines the telephone number of a user's telephone without answering the phone when a call is made from the user's telephone to the dedicated telephone number,
**characterized in that**
the server can send information including at least the dedicated telephone number and the telephone number of the user's telephone to the reception relay device of a callback company via the Internet after the call from the user's telephone is hung up.

15. A speech communication system, comprising:
a server connected to Internet; and
a reception relay device connected to Internet and a telephone exchange,
wherein said server has functionality as an Internet server, and includes a webpage recording unit for recording dedicated webpages for individual members and a database that stores member telephone numbers associated with URLs of the members' dedicated webpages, said dedicated webpage displaying a list of called parties with telephone numbers registered by a member beforehand and allowing a user to select a desired called party from the list,
wherein said server searches said database with the URL of the accessed dedicated webpage as a key to retrieve the telephone number of the member using the dedicated webpage, and, after the member's access to the dedicated webpage is complete, sends at least information on the member's telephone number and the telephone number of the called party selected by the member on the dedicated webpage to said reception relay device via Internet, and
wherein said reception relay device, after receiving the information on the member's telephone number and the called party's telephone numbers sent form said server, calls the member's telephone number and the called party's telephone numbers using said telephone exchange, and when both the member and the called party answer the call, connects a telephone line between them to allow the parties to talk on phone.

16. The speech communication system according to Claim 15, wherein said server further stores each member's password and sends information on a member's password when sending information on the telephone numbers of the member accessing the dedicated webpage and the caller party to said reception relay device.

17. The speech communication system according to Claim 15 or 16, wherein said telephone exchange further calls the member's and the called party's telephone numbers again after a predetermined time period when said telephone exchange fails to connect a telephone line between the member and the called party after calling their telephone numbers.

18. A server for a speech communication system, which is connected to Internet and has functionality as an Internet server, said server comprising:
a webpage recording unit for storing dedicated webpages for each member; and
a database for storing a member's telephone number associated with URL of the dedicated webpage for the member,
wherein said dedicated webpage displays a list of called parties with the member's telephone numbers registered by a member beforehand and allows a user to select a desired called party from the list, and
said server searches said database with the URL of the accessed dedicated webpage as a key to retrieve the telephone number of the member using the dedicated webpage, and after the member's access to the dedicated webpage is complete, sends at least information on the member's telephone number and the telephone number of the called party selected by the member on the dedicated webpage to the reception relay device of a callback company via Internet so as to prompt the reception relay device to call both the member's and the called party's telephone numbers to connect a telephone line between them.

19. A server accessible to a mobile phone over a network, comprising:
a called party table that stores a caller telephone number correlated with a list of called party telephone numbers that can be called from the caller;
acquiring means for acquiring the telephone number of a mobile phone accessing the server over a network;
derive means for deriving a list of called party telephone numbers that can be called from said telephone number aquired by said acquiring means by making reference to said called party table;
means for sending to said mobile phone the list of called party telephone numbers derived by said derive means;
means for receiving from said mobile phone a telephone number to be called that is included in said list; and
number transmission means for sending the telephone number acquired by said acquiring means and the telephone number received by said reception means to a exchange server so that an exchange calls the telephone number acquired by said acquiring means and the telephone number received by said reception means.

20. The server according to Claim 19, further comprises a telephone number table that stores identification information for a mobile phone correlated with the telephone number of that mobile phone,
wherein said acquiring means receives from a mobile phone accessing the server identification information thereof over a network and acquire the telephone number of said mobile phone with making reference to said telephone number table based on the received identification information:

21. The server according to Claim 19, further comprising a fee table that stores types of carriers and fee system for the carriers,
wherein said number transmission means includes:
determination means for, by making reference to the telephone number acquired by said acquiring means, the telephone number received by said reception means and said fee table, determining the least expensive carrier for calling those telephone numbers; and
means for sending the telephone number acquired by said acquiring means and the telephone number received by said reception means to an appropriate exchange server so that an exchange utilizing the carrier determined by said determination means calls the telephone number acquired by said acquiring means and the telephone number received by said reception means.

22. A server accessible to a mobile phone over a network, comprising:
means for receiving a mail from a mobile phone over a network;
means for analyzing the received mail to acquire the telephone number of said mobile phone and the telephone number of a called party that the user of said mobile phone wants to call;
means for sending the telephone number of said mobile phone and the telephone number of said called party to a exchange server so that an exchange calls said mobile phone and said called party.

23. A communication method performed by a mobile phone and a server that can communicate over a network, comprising:
an acquisition step of a server acquiring the telephone number of a mobile phone accessing the server over a network;
a step of the server sending a list of called party telephone numbers that can be called from said telephone number acquired in said acquisition step to said mobile phone;
a reception step of the server receiving from said mobile phone a telephone number to be called that is included in said telephone number list;
a step of the server sending the telephone number acquired in said acquisition step and the telephone number received in said reception step to a exchange server; and
a step of said exchange server controlling an exchange to call the telephone number acquired in said acquisition step and the telephone number received in said reception step to establish connection between them so that parties can talk using telephones having the telephone numbers.

## Amended claims

### Amended claims under Art. 19.1 PCT

1. (Canceled)

2. (Canceled)

3. (Canceled)

4. (Canceled)

5. (Canceled)

6. (Canceled)

7. (Canceled)

8. (Canceled)

9. (Canceled)

10. (Canceled)

11. (Canceled)

12. (Canceled)

13. (Canceled)

14. (Canceled)

15. A speech communication system, comprising:
a server connected to Internet; and
a reception relay device connected to Internet and a telephone exchange,
wherein said server has functionality as an Internet server, and includes a webpage recording unit for recording dedicated webpages for individual members and a database that stores member telephone numbers associated with URLs of the members' dedicated webpages, said dedicated webpage displaying a list of called parties with telephone numbers registered by a member beforehand and allowing a user to select a desired called party from the list,
wherein said server searches said database with the URL of the accessed dedicated webpage as a key to retrieve the telephone number of the member using the dedicated webpage, and, after the member's access to the dedicated webpage is complete, sends at least information on the member's telephone number and the telephone number of the called party selected by the member on the dedicated webpage to said reception relay device via Internet, and
wherein said reception relay device, after receiving the information on the member's telephone number and the called party's telephone numbers sent form said server, calls the member's telephone number and the called party's telephone numbers using said telephone exchange, and when both the member and the called party answer the call, connects a telephone line between them to allow the parties to talk on phone.

16. The speech communication system according to Claim 15, wherein said server further stores each member's password and sends information on a member's password when sending information on the telephone numbers of the member accessing the dedicated webpage and the caller party to said reception relay device.

17. The speech communication system according to Claim 15 or 16, wherein said telephone exchange further calls the member's and the called party's telephone numbers again after a predetermined time period when said telephone exchange fails to connect a telephone line between the member and the called party after calling their telephone numbers.

18. A server for a speech communication system, which is connected to Internet and has functionality as an Internet server, said server comprising:
a webpage recording unit for storing dedicated webpages for each member; and
a database for storing a member's telephone number associated with URL of the dedicated webpage for the member,
wherein said dedicated webpage displays a list of called parties with the member's telephone numbers registered by a member beforehand and allows a user to select a desired called party from the list, and
said server searches said database with the URL of the accessed dedicated webpage as a key to retrieve the telephone number of the member using the dedicated webpage, and after the member's access to the dedicated webpage is complete, sends at least information on the member's telephone number and the telephone number of the called party selected by the member on the dedicated webpage to the reception relay device of a callback company via Internet so as to prompt the reception relay device to call both the member's and the called party's telephone numbers to connect a telephone line between them.

19. A server accessible to a mobile phone over a network, comprising:
a called party table that stores a caller telephone number correlated with a list of called party telephone numbers that can be called from the caller;
acquiring means for acquiring the telephone number of a mobile phone accessing the server over a network;
derive means for deriving a list of called party telephone numbers that can be called from said telephone number aquired by said acquiring means by making reference to said called party table;
means for sending to said mobile phone the list of called party telephone numbers derived by said derive means;
means for receiving from said mobile phone a telephone number to be called that is included in said list; and
number transmission means for sending the telephone number acquired by said acquiring means and the telephone number received by said reception means to a exchange server so that an exchange calls the telephone number acquired by said acquiring means and the telephone number received by said reception means.

20. The server according to Claim 19, further comprises a telephone number table that stores identification information for a mobile phone correlated with the telephone number of that mobile phone,
wherein said acquiring means receives from a mobile phone accessing the server identification information thereof over a network and acquire the telephone number of said mobile phone with making reference to said telephone number table based on the received identification information.

21. The server according to Claim 19, further comprising a fee table that stores types of carriers and fee system for the carriers,
wherein said number transmission means includes:
determination means for, by making reference to the telephone number acquired by said acquiring means, the telephone number received by said reception means and said fee table, determining the least expensive carrier for calling those telephone numbers; and
means for sending the telephone number acquired by said acquiring means and the telephone number received by said reception means to an appropriate exchange server so that an exchange utilizing the carrier determined by said determination means calls the telephone number acquired by said acquiring means and the telephone number received by said reception means.

22. A server accessible to a mobile phone over a network, comprising:
means for receiving a mail from a mobile phone over a network;
means for analyzing the received mail to acquire the telephone number of said mobile phone and the telephone number of a called party that the user of said mobile phone wants to call;
means for sending the telephone number of said mobile phone and the telephone number of said called party to a exchange server so that an exchange calls said mobile phone and said called party.

23. A communication method performed by a mobile phone and a server that can communicate over a network, comprising:
an acquisition step of a server acquiring the telephone number of a mobile phone accessing the server over a network;
a step of the server sending a list of called party telephone numbers that can be called from said telephone number acquired in said acquisition step to said mobile phone;
a reception step of the server receiving from said mobile phone a telephone number to be called that is included in said telephone number list;
a step of the server sending the telephone number acquired in said acquisition step and the telephone number received in said reception step to a exchange server; and
a step of said exchange server controlling an exchange to call the telephone number acquired in said acquisition step and the telephone number received in said reception step to establish connection between them so that parties can talk using telephones having the telephone numbers.
